(19) **Europäisches Patentamt / European Patent Office / Office européen des brevets**

(11) **EP 4 738 281 A1**

(12) # EUROPEAN PATENT APPLICATION

(43) Date of publication:
06.05.2026 Bulletin 2026/19

(21) Application number: 25211961.5

(22) Date of filing: 29.10.2025

(51) International Patent Classification (IPC):
*G06V 10/774* (2022.01)    *G06V 20/62* (2022.01)

(52) Cooperative Patent Classification (CPC):
**G06V 10/774; G06V 20/635;** G06V 30/10

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **30.10.2024 US 202418932169**

(71) Applicant: **Nielsen Consumer LLC
Chicago, IL 60606 (US)**

(72) Inventors:
- **MARTÍNEZ CEBRIÁN, Javier**
  **28660 Madrid (ES)**
- **MARTINEZ, Elena**
  **Chicago, Illinois, 60606 (US)**
- **CORRALES SÁNCHEZ, Héctor**
  **Chicago, Illinois, 60606 (US)**
- **YEBES TORRES, Jose Javier**
  **47008 Valladolid (ES)**

(74) Representative: **Samson & Partner Patentanwälte mbB
Widenmayerstraße 6
80538 München (DE)**

(54) **METHODS, SYSTEMS, ARTICLES OF MANUFACTURE AND APPARATUS TO LABEL DATA**

(57) Systems, apparatus, articles of manufacture, and methods are disclosed to label data. An example apparatus includes interface circuitry, machine-readable instructions, and at least one processor circuit to be programmed by the machine-readable instructions to separate label data in a first data set from portions of an image, generate candidate labeled data based on associated ones of unlabeled portions of the image and optical character recognition (OCR) data, generate key performance indicator (KPI) metric values based on a comparison between the candidate labeled data and a second data set, and adjust weights of a model based on the KPI metric values.

FIG. 1

EP 4 738 281 A1

## Description

### FIELD OF THE DISCLOSURE

This disclosure relates generally to machine learning training and, more particularly, to methods, systems, articles of manufacture and apparatus to label data.

### BACKGROUND

Artificial intelligence (AI) and machine learning (ML) techniques enable new insights to be learned from data sources. Industries that benefit from such techniques include medical initiatives to determine cancer related proteins, pharmaceutical treatment projections, consumer retail activities, and farming crop management.

### BRIEF DESCRIPTION OF THE DRAWINGS

FIG. 1 is a block diagram of an example environment in which example data label circuitry operates to generate labeled data.

FIG. 2 is a block diagram of an example implementation of the data label circuitry of FIG. 1.

FIG. 3 is a block diagram of an example distant supervision pipeline generated by the data label circuitry of FIGS. 1 and 2 to label data.

FIG. 4 is a block diagram of an example active learning pipeline generated by the data label circuitry of FIGS. 1 and 2 to label data.

FIG. 5 is a block diagram of an example merged pipeline generated by the data label circuitry of FIGS. 1 and 2 to label data.

FIG. 6 is a block diagram of an example implementation of the data label circuitry of FIGS. 1 and 2 to label data.

FIGS. 7-11 are flowcharts representative of example machine readable instructions and/or example operations that may be executed, instantiated, and/or performed by example programmable circuitry to implement the data label circuitry of FIGS. 1, 2 and 6.

FIG. 12 is a block diagram of an example processing platform including programmable circuitry structured to execute, instantiate, and/or perform the example machine readable instructions and/or perform the example operations of FIGS. 7-11 to implement the data label circuitry of FIGS. 2 and 6.

FIG. 13 is a block diagram of an example implementation of the programmable circuitry of FIG. 12.

FIG. 14 is a block diagram of another example implementation of the programmable circuitry of FIG. 12.

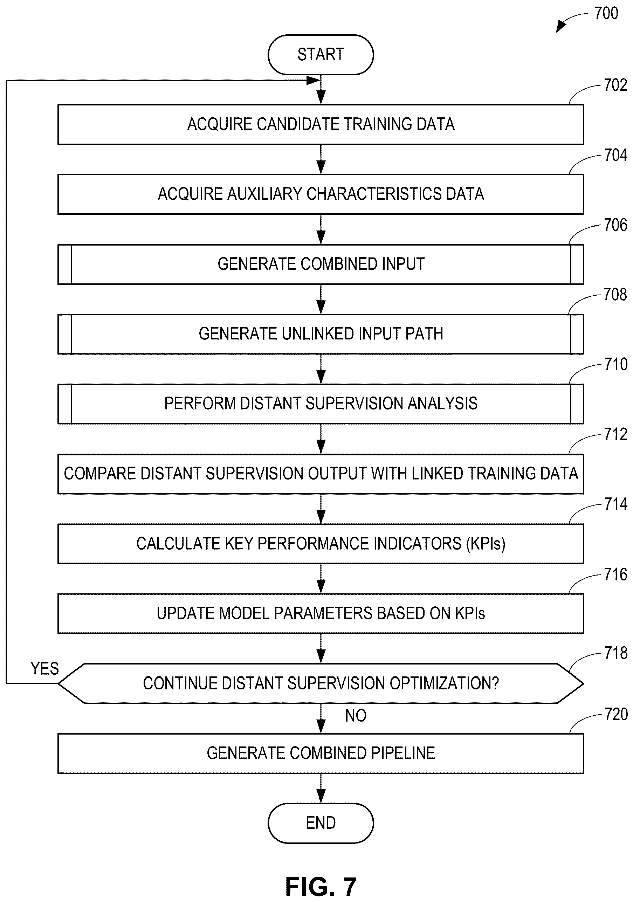

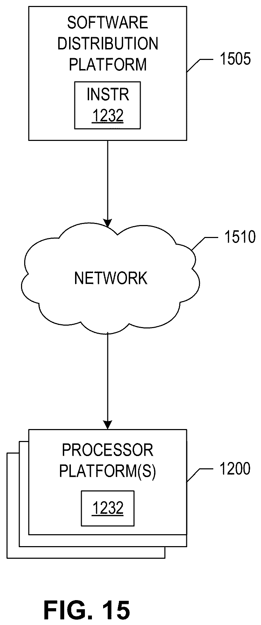

FIG. 15 is a block diagram of an example software/firmware/instructions distribution platform (e.g., one or more servers) to distribute software, instructions, and/or firmware (e.g., corresponding to the example machine readable instructions of FIGS. 7-11) to client devices associated with end users and/or consumers (e.g., for license, sale, and/or use), retailers (e.g., for sale, re-sale, license, and/or sub-license), and/or original equipment manufacturers (OEMs) (e.g., for inclusion in products to be distributed to, for example, retailers and/or to other end users such as direct buy customers).

In general, the same reference numbers will be used throughout the drawing(s) and accompanying written description to refer to the same or like parts. The figures are not necessarily to scale.

### DETAILED DESCRIPTION

Artificial Intelligence (AI) and machine learning (ML) are applicable to a broad landscape of use cases related to text and image understanding. Developing solutions to address use cases requires training data that is relevant to such use cases. Additionally, such relevant training data should have a sufficient number of data samples to permit AI/ML training operations to result in model tuning with fewer errors.

Artificial intelligence (AI), including machine learning (ML), deep learning (DL), and/or other artificial machine-driven logic, enables machines (e.g., computers, logic circuits, etc.) to use a model to process input data to generate an output based on patterns and/or associations previously learned by the model via a training process. For instance, the model may be trained with data to recognize patterns and/or associations and follow such patterns and/or associations when processing input data such that other input(s) result in output(s) consistent with the recognized patterns and/or associations.

Many different types of machine learning models and/or machine learning architectures exist. In some examples disclosed herein, self-supervised models, semi-supervised models, transformer models and distant supervision models are used. However, other types of machine learning models could additionally or alternatively be used.

In general, implementing a ML/AI system involves two phases, a learning/training phase and an inference phase. In the learning/training phase, a training algorithm is used to train a model to operate in accordance with patterns and/or associations based on, for example, training data. In general, the model includes internal parameters that guide how input data is transformed into output data, such as through a series of nodes and connections within the model to transform input data into output data. Additionally, hyperparameters are used as part of the training process to control how the learning is performed (e.g., a learning rate, a number of layers to be used in the machine learning model, etc.). Hyperparameters are defined to be training parameters that are determined prior to initiating the training process.

Different types of training may be performed based on the type of ML/AI model and/or the expected output. For example, supervised training uses inputs and corresponding expected (e.g., labeled) outputs to select parameters (e.g., by iterating over combinations of select parameters) for the ML/AI model that reduce model error. As used herein, labelling refers to an expected output of the machine learning model (e.g., a classification, an expected output value, etc.) Alternatively, unsupervised training (e.g., used in deep learning, a subset of machine learning, etc.) involves inferring patterns from inputs to select parameters for the ML/AI model (e.g., without the benefit of expected (e.g., labeled) outputs).

In examples disclosed herein, training is performed until one or more stopping criteria are met, including threshold metrics associated with key performance indicators (KPIs) as described in further detail below. In some examples, training is performed using hyperparameters that control how the learning is performed (e.g., a learning rate, a number of layers to be used in the machine learning model, etc.). In some examples re-training may be performed. Such re-training may be performed in response to one or more threshold metrics begin satisfied (or not).

Training is performed using training data. In examples disclosed herein, the training data originates from existing models from, for example, legacy systems that use particular geographic data repositories (e.g., data corpus). Because in some examples supervised training is used, the training data is labeled, but not necessarily labeled in a manner/format appropriate for one or more next generation (e.g., new) target AI/ML models.

Once training is complete, the model is deployed for use as an executable construct that processes an input and provides an output based on the network of nodes and connections defined in the model. The model is stored at one or more network accessible locations. The model may then be executed by the example structure disclosed below.

Once trained, the deployed model may be operated in an inference phase to process data. In the inference phase, data to be analyzed (e.g., live data) is input to the model, and the model executes to create an output. This inference phase can be thought of as the AI "thinking" to generate the output based on what it learned from the training (e.g., by executing the model to apply the learned patterns and/or associations to the live data). In some examples, input data undergoes pre-processing before being used as an input to the machine learning model. Moreover, in some examples, the output data may undergo post-processing after it is generated by the AI model to transform the output into a useful result (e.g., a display of data, an instruction to be executed by a machine, etc.).

In some examples, output of the deployed model may be captured and provided as feedback. By analyzing the feedback, an accuracy of the deployed model can be determined. If the feedback indicates that the accuracy of the deployed model is less than a threshold or other criterion, training of an updated model can be triggered using the feedback and an updated training data set, hyperparameters, etc., to generate an updated, deployed model.

In some circumstances, existing modeling approaches have a robust training data corpus to allow such modeling approaches to execute with expected error rates and/or efficiencies. However, next generation modeling approaches, such as AI/ML modeling approaches, may require additional data for training and/or data in a particular format to permit training that is not currently available. Typically, acquiring proper data for AI/ML modeling approaches requires a computationally intensive and/or manual data generation task that can span weeks or months before a sufficient quantity of labeled training data is available. In some circumstances, next generation models (e.g., AI/ML models) are provided legacy data to be used for training without prior modification efforts. However, such non-tailored data causes several negative effects on the model. For instance, the model may need to process input training data that fails to align with particular formatting requirements, thereby causing processor exceptions to be thrown. Repeated exceptions cause processor congestion and elevated network bandwidth traffic associated with (a) transmitting unusable training data and (b) receiving excessive amounts of error reporting data.

Examples disclosed herein automate labelling data for targeted AI/ML modeling applications in a manner that reduces computational waste and network bandwidth consumption. Examples disclosed herein also label data in a manner that provides flexibility to use alternate data sources after a model (e.g., or a pipeline of models) is trained. For instance, training data associated with a first region of interest (RoI) may include particular nuances specific to that first region, such as particular terminology. Examples disclosed herein label data in a manner that considers an alternate source training data corpus (e.g., data sets associated with a particular topic, a particular geographic area, etc.) with different nuances that may not have been encountered and/or otherwise considered before.

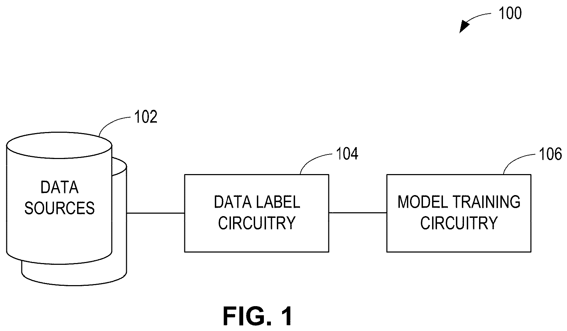

FIG. 1 is a block diagram of an example environment 100 in which example data label circuitry 104 operates to label data. In the illustrated example of FIG. 1, the environment 100 includes any number of data sources 102 to be evaluated and/or otherwise processed by the data label circuitry 104, and model training circuitry 106 to receive labeled data in a format that aligns with its particular expectations. The example data sources 102 are sometimes referred to as knowledge bases and include use-case specific data sources (e.g., from an industry of interest such as pharmaceutical drugs, petroleum extraction research, retail promotions, etc.) or public data sources. Use-case specific data sources may include promotional retail images, such as leaflets, that include any number of sections showing a particular product, showing particular text (e.g., overlaid text indicative of a product name, a product price, etc.), and representing a particular promotion or statement of availability. Sections or portions within an image associated with individual objects (e.g., products) are referred to herein as "crops."

Crops may include a sub-image of the overall image, such as an image of a soda can on a leaflet (e.g., a digital image that includes a number of individual products) having any number of other sub-images (crops) of products. Crops may have other information associated therewith, such as text that represents a name of the product in the crop, or text that represents a price of the product in the crop. In some circumstances the text information is overlaid on the crop, while in some circumstances the text information is adjacent (e.g., below) to the crop. When crops are linked with associated data (e.g., metadata such as OCR text), the crops become labeled (e.g., labeled crops).

While some legacy models utilize information based on prior efforts of linking crops with metadata, in the event a new model is to be used, such new models cannot simply take the labeled crops as input data for training purposes. In some circumstances, the new model is structured in a manner in which the model training circuitry 106 requires a particular and/or otherwise different data input format. In some circumstances, the new model is to operate in a manner that considers different types of data that are not compatible with the legacy models. For instance, a legacy model may operate in a specific country in which the use-case is focused on country specific terminology, country specific measurement units (e.g., ounces), and/or country specific currencies (e.g., U.S. dollars). On the other hand, new and/or otherwise next generation models (e.g., and model training circuitry 106 to train such next generation models) may operate with alternate terminology (e.g., "potato chips" versus "crisps"), alternate measurement units (e.g., milliliters versus ounces), or alternate currencies (e.g., Euros versus U.S. dollars).

When crops are associated with metadata, the crop may be referred to as a labeled crop. In some circumstances, the labeled crop may be provided to machine learning models to facilitate training. However, and as described above, some labeled crops may not exhibit a particular format to be accepted by a machine learning model as training data, which results in thrown exceptions or erroneous training effects. Examples disclosed herein label data in a manner that conforms to particular content and formatting expected by the model training circuitry 106. Additionally, rather than initiating exhaustive computational resources to cultivate and label new training datasets for the new AI/ML models to be trained by the model training circuitry 106, examples disclosed herein leverage prior training data to generate properly formatted labeled data automatically, thereby reducing instances of computationally expensive exceptions thrown by training efforts.

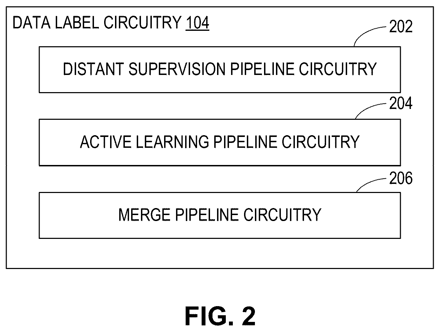

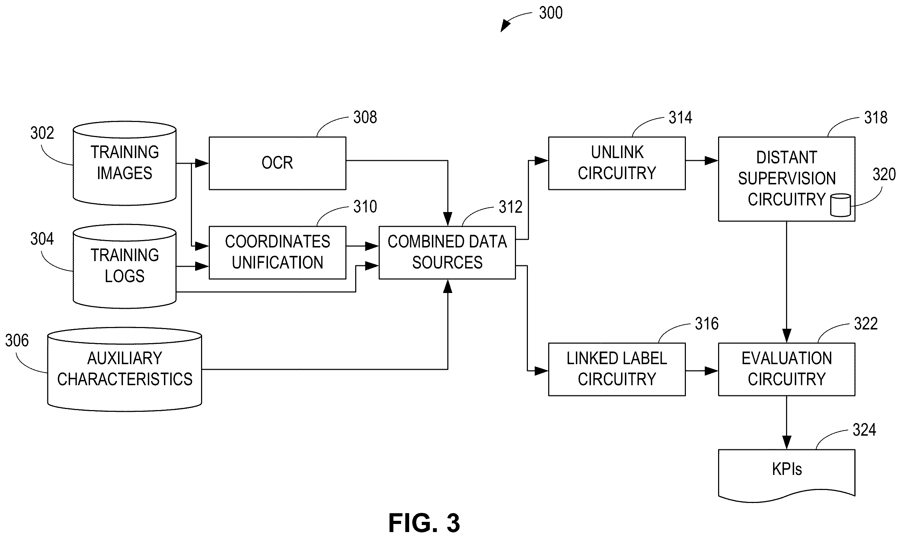

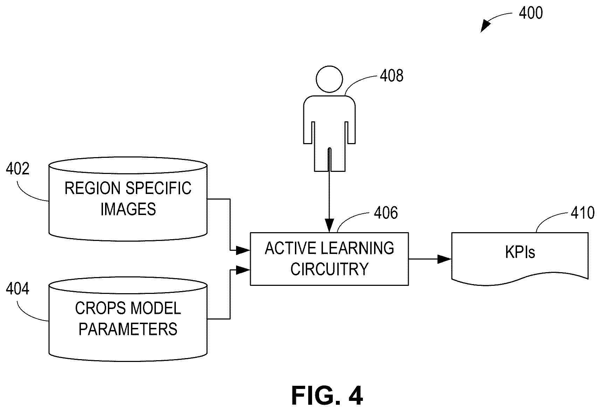

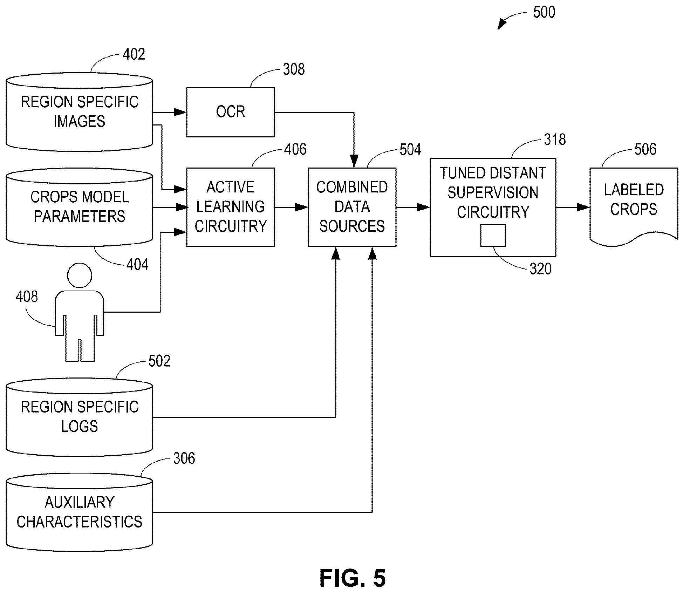

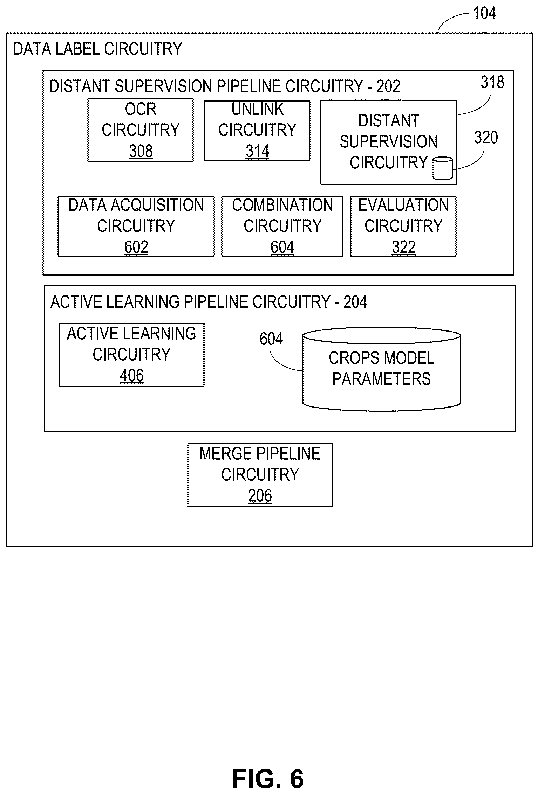

FIG. 2 is a block diagram of the example data label circuitry 104 of FIG. 1. In the illustrated example of FIG. 2, the data label circuitry 104 includes example distant supervision pipeline circuitry 202, example active learning pipeline circuitry 204, and example merge pipeline circuitry 206. In operation, the distant supervision pipeline circuitry 202 facilitates an example distant supervision pipeline 300 described below in connection with FIG. 3, the active learning pipeline circuitry 204 facilitates an example active learning pipeline 400 described below in connection with FIG. 4, and the merge pipeline circuitry 206 facilitates an example merged pipeline 500 described below in connection with FIG. 5. Additional detail corresponding to the data label circuitry 104 of FIG. 1 is described below in connection with FIG. 6.

FIG. 3 illustrates the example distant supervision pipeline 300 to test and optimize a distant supervision model. Distant supervision modeling makes use of existing databases to identify positive and negative match instances for a relation of interest. In some examples the existing databases are domain-specific (e.g., content of the existing database(s) includes pharmaceutical drug related information, content of the existing database(s) includes retail promotion information, etc.). In the illustrated example of FIG. 3, the distant supervision pipeline 300 includes example training images 302, example training logs 304, example auxiliary characteristics 306, example optical character recognition (OCR) circuitry 308, example coordinates unification circuitry 310, an example combined data sources storage 312 (e.g., data structures, memory circuitry), example uplink circuitry 314, example linked label circuitry 316 (sometimes referred to as "ground truth data"), example distant supervision circuitry 318, example distant supervision model parameters 320, example evaluation circuitry 322, and example key performance indicators (KPIs) 324.

In operation, the distant supervision pipeline 300 utilizes previously acquired and/or otherwise cultivated training images 302 (e.g., crops), training logs 304 (e.g., metadata associated with respective crops), and any available auxiliary characteristics 306. In some examples, the auxiliary characteristics include data sources indicative of use-case specific information, such as product data characteristics unique to an industry of interest (e.g., retail products). In some examples, the auxiliary characteristics data source 306 includes a global reference data system that stores product information, such as product identifiers, product sizes, product dimensions, and other characteristics to leverage generic product characteristics in an effort to scale identification capabilities in different countries. For instance, a legacy model may operate in the United States with training data associated with snack products referred to as "potato chips." Such legacy training data may have associated characteristics as a product identifier, a particular size package, product description, etc. However, additional information stored in the auxiliary characteristics database 306 may include the same product identifier and size, but also include alternate product description information, such as "crisps." Such auxiliary information is utilized by the example distant supervision model to make linkages and/or associations between disparate pieces of information fed thereto.

Generally speaking, the distant supervision pipeline 300 trains, tunes, and/or otherwise configures the distant supervision model parameters 320 in an effort to achieve KPI values that meet one or more threshold values indicative of good performance. As described in further detail below, an example KPI target greater than 80% may be deemed acceptable to conclude that the distant supervision model parameters 320 cause a distant supervision model to precisely identify, for instance, a brand identification based on quantities of true positive identification instances and false positive instances. While the training images 302 and training logs 304 were vetted and deemed "gold standard" with one or more legacy models, such training data is not tuned, formatted and/or otherwise labeled in a manner to permit the distant supervision model 318 to operate with an expected degree of accuracy and/or efficiency. As such, the pipeline 300 strips and/or otherwise deconstructs the labeled data so that it can be used to establish model parameters 320 that permit the distant supervision model 318 to learn to operate with acceptable results. The OCR circuitry 308 extracts OCR data from crops and determines bounding boxes or polygons associated with the extracted OCR data. The coordinates unification circuitry 310 re-scales the training log information 304 to generate a scaling factor that can apply to all crops to be analyzed (e.g., crop pixel scaling factor).

The example distant supervision pipeline circuitry 202 combines available data sources into a combined data sources storage 312, which includes all legacy linked crops data. The example linked label circuitry 316 cross links crops and associated products that are known to be accurate matches, which is provided to and/or otherwise transmitted to the example evaluation circuitry 322 to be compared with estimated crops/product associations generated by the example distant supervision circuitry 318 during its testing and optimization efforts (e.g., "learning"). However, before the distant supervision circuitry 318 generates estimated crop/product associations, the unlink circuitry 314 unlinks and/or otherwise deconstructs crop/product associations from the training images data 302 and training logs data 304. Stated differently, the unlink circuitry 314 deconstructs the data relationships to allow optimization or tuning of the distant supervision model 318 such that particular distant supervision model parameters 320 can be calculated. The evaluation circuitry 322 compares estimated crop/product associations from the distant supervision model 318 with ground truth linked crop/product associations to determine errors that can be used for model parameter adjustment/corrections. In particular, the evaluation circuitry 322 calculates KPIs to determine values indicative of the ability of the distant supervision model 318 to correctly determine true positive associations (e.g., identifying instances where a promotion corresponding to a crop is correctly determined).

In some examples, the distant supervision model 318 includes a multiclass logistic regression classifier to learn, revise and/or otherwise adjust weights to be stored in a memory of the distant supervision model parameters 320. The example evaluation circuitry 322 determines weight values in connection with calculated KPI values (e.g., scores) corresponding to different targets. Targets include, but are not limited to universal product code (UPC), brand, brand description, product size, number of units, alternate names (e.g., of product), product category, etc. Additionally, scores associated with KPI targets vary depending on other factors, such as a particular retailer or a particular region or retail activity. In some examples, the distant supervision pipeline circuitry 202 determines KPI precision values in a manner consistent with example Equation 1.

$$KPI\ (Precision) = \frac{TP}{(TP + FP)}$$

Equation 1.

In the illustrated example of Equation 1, TP represents a true positive, which corresponds to a correct assignment of criteria based on a similarity score (e.g., a Jaccard score). FP represents a false positive, such as circumstances where an association is detected that is inconsistent with ground truth data. In some examples, the distant supervision pipeline circuitry 202 determines KPI recall values in a manner consistent with example Equation 2.

$$KPI\ (Recall) = \frac{TP}{(TP + FN)}$$

Equation 2.

In the illustrated example of Equation 2, FN represents a false negative, such as circumstances where an association is not detected that should have been based on ground truth data. The example distant supervision model 318 is trained in an effort to maximize precision because it reflects a degree of quality of making proper associations of information that can ultimately be used for model training.

FIG. 4 illustrates the example active learning pipeline 400 to improve a quality of crops to be used for training tasks. In the illustrated example of FIG. 4, the pipeline 400 includes a region specific image database 402, a crops model parameters database 404, and an active learning model 406 (sometimes referred to herein as active learning circuitry 406). In some examples, the active learning model 406 is supplemented with verification input 408, such as a human auditor to verify that the active learning model 406 is correctly identifying crops from a digital image. The example active learning model 406 generates active learning KPIs 410 that may be used for tuning the crops model parameters stored in the crops model parameters database 404 on an iterative basis. In some examples, the region specific image database 402 includes digitized leaflets from several different jurisdictions, and the active learning circuitry 406 is trained to identify crops within each digitized leaflet. As described in further detail below, the trained crops model parameters 404 are implemented in a runtime mode.

FIG. 5 illustrates the example merged pipeline 500 to generate labeled cops. In the illustrated example of FIG. 5, the pipeline 500 includes the region specific image database 402, which may be associated and/or otherwise populated with images from a region not yet analyzed on a prior occasion. Stated differently, while data input associated with FIG. 3 included labeled data (e.g., test data), the pipeline 500 of FIG. 5 operates with field data, such as region-sourced images that do not have associated label data. The example pipeline 500 also includes the crops model parameters database 404, which includes updated and/or otherwise refined parameters based on training associated with the example pipeline 400 of FIG. 4. In some examples, the pipeline 500 of FIG. 5 includes the verification input 408 to verify that crops identified by the example active learning circuitry 406 are accurate. The example pipeline 500 of FIG. 5 includes the OCR circuitry 308 to generate OCR text data associated with the region specific images. In some examples, particular metadata associated with the region of interest includes a region specific log database 502, which may include product nomenclature, product characteristics and/or other metadata associated with and/or otherwise unique to the region of interest. The example pipeline 500 of FIG. 5 also includes the auxiliary characteristics database 306, which may include information such as product identifiers, product size information, product description information, etc.

The example pipeline 500 of FIG. 5 generates a combined data source 504, such as a data structure that is formatted in a manner to be fed to and/or otherwise transmitted to the distant supervision circuitry 318 (e.g., the distant supervision model) that is tuned based on the disclosed examples associated with FIG. 3. In particular, tuned distant supervision circuitry 318 operates in a manner guided by model parameters 320 learned in a manner consistent with the pipeline 300 of FIG. 3. The example tuned distant supervision circuitry then generates labeled crops 506 by applying the tuned model parameters 320 to the combined data source 504 information.

FIG. 6 is a block diagram of the example data label circuitry 104 of FIG. 1 and includes additional detail corresponding to the data label circuitry 104 of FIG. 2. In the illustrated example of FIG. 6, the distant supervision pipeline circuitry 202 includes the example OCR circuitry 308, the example uplink circuitry 314, the example distant supervision model 318 (e.g., distant supervision circuitry 318) and its corresponding parameters 320 (e.g., a data structure, database, etc.), example data acquisition circuitry 602, example combination circuitry 604, and the example evaluation circuitry. The example data label circuitry 104 of FIG. 6 also includes the example active learning pipeline circuitry 204, which includes the example active learning model 406 (e.g., active learning circuitry 406) and its corresponding crops model parameters 404 (e.g., a data structure, database, etc.). The example data label circuitry 104 of FIG. 6 also includes the example merge pipeline circuitry 206.

In operation, the example data acquisition circuitry 602 acquires candidate training data, such as training images 302 and associated labels/metadata 304. As described above, while prior repositories of trained data may exist for legacy and/or otherwise outdated models, known approaches of utilizing new models typically discarded such repositories because they are inconsistent or do not conform to requirements of AI/ML models and/or training thereof. Instead, known approaches required a computationally expensive and time-consuming manual labeling effort. Unlike prior approaches that discarded trained data associated with legacy models, examples disclosed herein salvage data from repositories of crops data in a manner that re-labels them for use in AI/ML model training efforts.

As described above, merely providing previously trained crops data as input to AI/ML models produces unpredictable and erroneous results. Additionally, AI/ML model training circuitry 106 processes received training data to verify it is suitable and/or otherwise compatible with formatting and content standards. Deviations from such standards cause the model training circuitry 106 to generate processing exceptions, which are computationally expensive, wasteful and time consuming.

Returning to the illustrated example of FIG. 6, the data acquisition circuitry 602 retrieves, receives and/or otherwise obtains available auxiliary characteristics from the example auxiliary characteristics database 306. In some examples, the auxiliary characteristics database 306 is an industry-specific database of nomenclature, such as cultivated information related to product identifiers and corresponding product characteristics, or cultivated information related to pharmaceutical drugs and corresponding treatment protocols, etc. The example combination circuitry 604 generates a combined input data structure using all available sources that may be helpful for the objective of training AI/ML models. In particular, the combination circuitry 604 invokes and/or otherwise instantiates the OCR circuitry 308 to perform OCR operations on training images obtained from the training images database 302. The example combination circuitry 604 performs coordinate unification operations based on the training images and training logs to help normalize input data and generate a scaling factor for image data processing. For instance, coordinate unification performed by the combination circuitry 604 may operate on an image in a particular coordinate space (e.g., 200x400 pixels), while crops may be in an alternate coordinate space (e.g., 100x200 pixels), for which a ratio is applied to the different dimensions to reduce inconsistencies. The combination circuitry 604 combines the OCR output(s), crops, characteristics data and available auxiliary characteristics as a data structure formatted to comply with expectations of the example distant supervision model 318.

To train the distant supervision model 318, the unlink circuitry 314 deconstructs label information and available auxiliary characteristics from the crops so that isolated data is provided as input. Stated differently, while the crops, OCR output data and auxiliary characteristics data combined by the combination circuitry 604 represents ground truth data, such data is isolated, and/or otherwise deconstructed to create a first data set of separated input streams so that the distant supervision model 318 can make iterative attempts to generate associations and update the model parameters 320 (e.g., parameter tuning/learning). The first data set includes unliked data in which any labels that may have been linked to the crop are removed and/or otherwise deconstructed. A second data set of input data streams is sent from the linked label circuitry 316 to the evaluation circuitry 322 for comparison purposes. The distant supervision model 318 assigns similarity scores to characteristics from the separated input streams, such as assigning scores to characteristics from the OCR data and available auxiliary characteristics. The distant supervision model 318 calculates cosine similarity scores for product description data and, for a given image (e.g., digitized leaflet) to be processed, selects a crop polygon. The distant supervision model 318 determines whether the selected crop polygon intersects an OCR polygon (e.g., an OCR bounding box) and, if so, associates the selected crop with the data identified by the OCR bounding box and any associated auxiliary characteristics. For example, if the crop polygon is a sub-image of a can of soda, and the OCR bounding box contains the text "Coke," then the distant supervision model 318 associates the crop with the OCR data, which may further be supplemented with auxiliary data corresponding to industry-specific characteristics (e.g., single serve can, flavor of beverage, volume of fluid, product identifier, etc.). Stated differently, the association generated by the distant supervision model 318 is candidate labeled crop data based on the intersections between the crops on the source image (e.g., a digitized leaflet) and OCR data. Additionally, the distant supervision model 318 formats the labeled data in a manner consistent with expectations of the model training circuitry 106. For example, labeled data formats may structure one or more input streams or data structures to have a particular order/sequence and/or type of data input (e.g., product name → crop pixel width dimension → crop pixel height dimension → product type → product size, etc.).

The example evaluation circuitry 322 compares the labeled output from the distant supervision model 318 to ground truth data 316 to calculate KPIs indicative of how accurate the distant supervision model 318 is performing. In some examples, the data label circuitry 104 updates the distant supervision model parameters 320 based on the calculated KPI values prior to running additional iterations until target and/or threshold KPI values are determined. One or more stopping criteria may be used to determine when the distant supervision model parameters 320 are suitable for use in a non-training environment, such as a runtime environment with input crops associated with an alternate region of interest.

After the distant supervision pipeline circuitry 202 completes model parameter 320 tuning and adjustment in connection with KPI metrics, and after the active learning pipeline circuitry 204 completes training of the active learning circuitry 406, the example merge pipeline circuitry 206 merges the distant supervision pipeline 300 with the active learning pipeline 400 to form the merged pipeline 500 of FIG. 5. The example merged pipeline 500 of FIG. 5 does not include training inputs, such as the training images 302 or the training logs 304. Instead, the example merge pipeline circuitry 206 generates the merged pipeline 500 to include the region specific image database 402, the crops model parameters database 404, verification input 408 when available, the region specific log database 502, and the auxiliary characteristics database 306. Stated differently, the example merge pipeline circuitry 206 generates the merged pipeline 500 to operate in a runtime environment.

The data acquisition circuitry 602 acquires the region specific images, region specific logs, and auxiliary characteristics. The active learning circuitry 406 generates crops based on an input image (e.g., a digitized leaflet), and the combination circuitry 604 generates a combined input data structure to be used as an input to the unlink circuitry 314 so that separated input streams can be generated as input to the tuned distant supervision model 318. As such, the tuned distant supervision model 318 generates labeled crops in view of the region specific images 402 in a manner that aligns with formatting and content requirements of the model training circuitry 106. In particular, the labeled data provided to the model training circuitry 106 results in fewer thrown exceptions that would otherwise occur with brute-force efforts to merely apply legacy trained data to the model training circuitry 106.

As described above, FIGS. 2 and 6 are block diagrams of an example implementation of the data label circuitry 104 of FIG. 1 to do data labeling. The data label circuitry 104 of FIGS. 2 and 6 may be instantiated (e.g., creating an instance of, bring into being for any length of time, materialize, implement, etc.) by programmable circuitry such as a Central Processor Unit (CPU) executing first instructions. Additionally or alternatively, the data label circuitry 104 of FIGS. 2 and 6 may be instantiated (e.g., creating an instance of, bring into being for any length of time, materialize, implement, etc.) by (i) an Application Specific Integrated Circuit (ASIC) and/or (ii) a Field Programmable Gate Array (FPGA) structured and/or configured in response to execution of second instructions to perform operations corresponding to the first instructions. It should be understood that some or all of the circuitry of FIGS. 2 and 6 may, thus, be instantiated at the same or different times. Some or all of the circuitry of FIGS. 2 and 6 may be instantiated, for example, in one or more threads executing concurrently on hardware and/or in series on hardware. Moreover, in some examples, some or all of the circuitry of FIGS. 2 and 6 may be implemented by microprocessor circuitry executing instructions and/or FPGA circuitry performing operations to implement one or more virtual machines and/or containers.

In some examples, the OCR circuitry 308, the unlink circuitry 314, the distant supervision circuitry 318, the data acquisition circuitry 602, the combination circuitry 604, the evaluation circuitry 322, or the distant supervision pipeline circuitry 202 is instantiated by programmable circuitry executing, respectively, OCR instructions, unlink instructions, distant supervision modeling instructions, data acquisition instructions, combination instructions, evaluation instructions and distant supervision pipeline instructions and/or configured to perform operations such as those represented by the flowcharts of FIGS. 7-11. In some examples, the active learning circuitry 406 or the active learning pipeline circuitry 204 is instantiated by programmable circuitry executing active learning modeling instructions and active learning pipeline instructions and/or configured to perform operations such as those represented by the flowcharts of FIGS. 7-11. In some examples, the merge pipeline circuitry 206 is instantiated by programmable circuitry executing merge pipeline instructions and/or configured to perform operations such as those represented by the flowcharts of FIGS. 7-11.

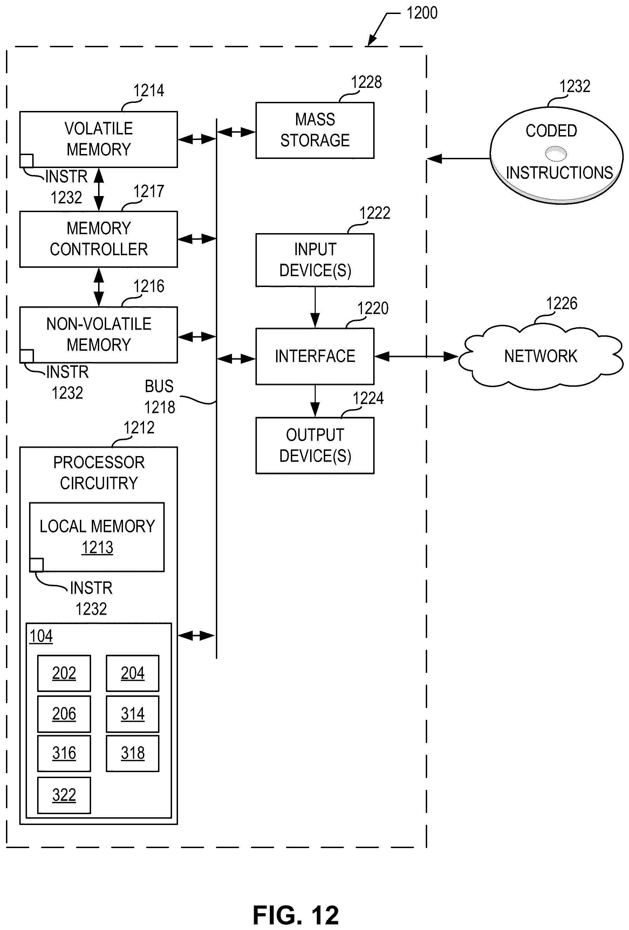

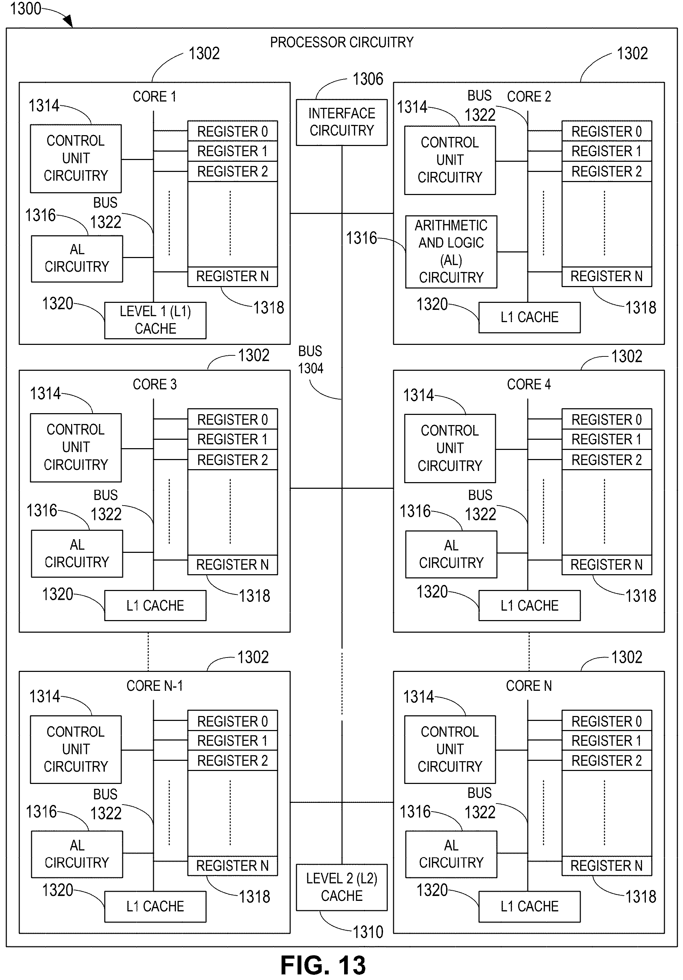

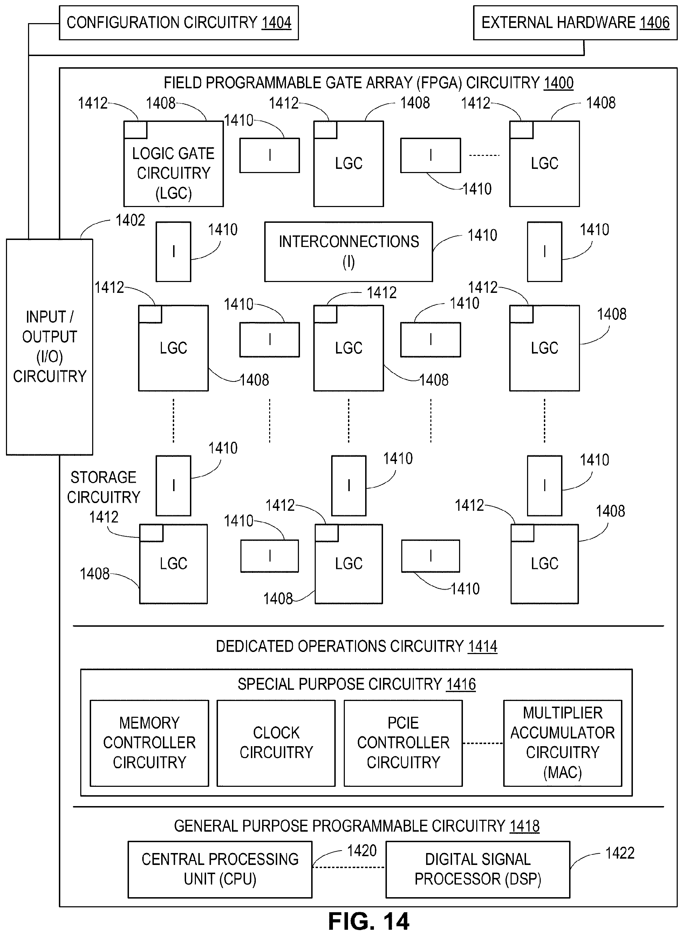

In some examples, the data label circuitry 104 includes means for optical character recognition, means for unlinking, means for distant supervision modeling, means for data acquisition, means for combining, means for evaluation, means for distant supervision pipeline generation, means for active learning modeling, means for active learning pipeline generation, and means for pipeline merging. For example, the means for optical character recognition may be implemented by the OCR circuitry 308, the means for unlinking may be implemented by the unlink circuitry 314, the means for distant supervision modeling may be implemented by the distant supervision circuitry 318, the means for data acquisition may be implemented by the data acquisition circuitry 602, the means for combining may be implemented by the combination circuitry 604, the means for evaluation may be implemented by the evaluation circuitry 322, the means for distant supervision pipeline generation may be implemented by the distant supervision pipeline circuitry 202, the means for active learning modeling may be implemented by the active learning circuitry 406, and the means for pipeline merging may be implemented by the merge pipeline circuitry 206. In some examples, the aforementioned circuitry may be instantiated by programmable circuitry such as the example programmable circuitry 1212 of FIG. 12. For instance, the aforementioned circuitry may be instantiated by the example microprocessor 1300 of FIG. 13 executing machine executable instructions such as those implemented by at least blocks of FIGS. 7-11. In some examples, the aforementioned circuitry may be instantiated by hardware logic circuitry, which may be implemented by an ASIC, XPU, or the FPGA circuitry 1400 of FIG. 14 configured and/or structured to perform operations corresponding to the machine readable instructions. Additionally or alternatively, the aforementioned circuitry may be instantiated by any other combination of hardware, software, and/or firmware. For example, the aforementioned circuitry may be implemented by at least one or more hardware circuits (e.g., processor circuitry, discrete and/or integrated analog and/or digital circuitry, an FPGA, an ASIC, an XPU, a comparator, an operational-amplifier (op-amp), a logic circuit, etc.) configured and/or structured to execute some or all of the machine readable instructions and/or to perform some or all of the operations corresponding to the machine readable instructions without executing software or firmware, but other structures are likewise appropriate.

While an example manner of implementing the data label circuitry 104 of FIG. 1 is illustrated in FIGS. 2 and 6, one or more of the elements, processes, and/or devices illustrated in FIGS. 2 and 6 may be combined, divided, re-arranged, omitted, eliminated, and/or implemented in any other way. Further, the example OCR circuitry 308, the example unlink circuitry 314, the example distant supervision circuitry 318, the example data acquisition circuitry 602, the example combination circuitry 604, the example evaluation circuitry 322, the example distant supervision pipeline circuitry 202, the example active learning circuitry 406, the example active learning pipeline circuitry 204, the example merge pipeline circuitry 206, and/or, more generally, the example data label circuitry 104 of FIGS. 2 and 6, may be implemented by hardware alone or by hardware in combination with software and/or firmware. Thus, for example, any of the example OCR circuitry 308, the example unlink circuitry 314, the example distant supervision circuitry 318, the example data acquisition circuitry 602, the example combination circuitry 604, the example evaluation circuitry 322, the example distant supervision pipeline circuitry 202, the example active learning circuitry 406, the example active learning pipeline circuitry 204, the example merge pipeline circuitry 206, and/or, more generally, the example data label circuitry 104, could be implemented by programmable circuitry in combination with machine readable instructions (e.g., firmware or software), processor circuitry, analog circuit(s), digital circuit(s), logic circuit(s), programmable processor(s), programmable microcontroller(s), graphics processing unit(s) (GPU(s)), digital signal processor(s) (DSP(s)), ASIC(s), programmable logic device(s) (PLD(s)), and/or field programmable logic device(s) (FPLD(s)) such as FPGAs. Further still, the example data label circuitry 104 of FIGS. 2 and 6 may include one or more elements, processes, and/or devices in addition to, or instead of, those illustrated in FIGS. 2 and 6, and/or may include more than one of any or all of the illustrated elements, processes and devices.

Flowcharts representative of example machine readable instructions, which may be executed by programmable circuitry to implement and/or instantiate the data label circuitry 104 of FIGS. 2 and 6 and/or representative of example operations which may be performed by programmable circuitry to implement and/or instantiate the data label circuitry 104 of FIGS. 2 and 6, are shown in FIGS. 7-11. The machine readable instructions may be one or more executable programs or portion(s) of one or more executable programs for execution by programmable circuitry such as the programmable circuitry 1212 shown in the example processor platform 1200 discussed below in connection with FIG. 12 and/or may be one or more function(s) or portion(s) of functions to be performed by the example programmable circuitry (e.g., an FPGA) discussed below in connection with FIGS. 13 and/or 14. In some examples, the machine readable instructions cause an operation, a task, etc., to be carried out and/or performed in an automated manner in the real world. As used herein, "automated" means without human involvement.

The programs may be embodied in instructions (e.g., software and/or firmware) stored on one or more non-transitory computer readable and/or machine readable storage medium such as cache memory, a magnetic-storage device or disk (e.g., a floppy disk, a Hard Disk Drive (HDD), etc.), an optical-storage device or disk (e.g., a Blu-ray disk, a Compact Disk (CD), a Digital Versatile Disk (DVD), etc.), a Redundant Array of Independent Disks (RAID), a register, ROM, a solid-state drive (SSD), SSD memory, non-volatile memory (e.g., electrically erasable programmable read-only memory (EEPROM), flash memory, etc.), volatile memory (e.g., Random Access Memory (RAM) of any type, etc.), and/or any other storage device or storage disk. The instructions of the non-transitory computer readable and/or machine readable medium may program and/or be executed by programmable circuitry located in one or more hardware devices, but the entire program and/or parts thereof could alternatively be executed and/or instantiated by one or more hardware devices other than the programmable circuitry and/or embodied in dedicated hardware. The machine readable instructions may be distributed across multiple hardware devices and/or executed by two or more hardware devices (e.g., a server and a client hardware device). For example, the client hardware device may be implemented by an endpoint client hardware device (e.g., a hardware device associated with a human and/or machine user) or an intermediate client hardware device gateway (e.g., a radio access network (RAN)) that may facilitate communication between a server and an endpoint client hardware device. Similarly, the non-transitory computer readable storage medium may include one or more mediums. Further, although the example program is described with reference to the flowchart(s) illustrated in FIGS. 7-11, many other methods of implementing the example data label circuitry 104 may alternatively be used. For example, the order of execution of the blocks of the flowcharts may be changed, and/or some of the blocks described may be changed, eliminated, or combined. Additionally or alternatively, any or all of the blocks of the flow chart may be implemented by one or more hardware circuits (e.g., processor circuitry, discrete and/or integrated analog and/or digital circuitry, an FPGA, an ASIC, a comparator, an operational-amplifier (op-amp), a logic circuit, etc.) structured to perform the corresponding operation without executing software or firmware. The programmable circuitry may be distributed in different network locations and/or local to one or more hardware devices (e.g., a single-core processor (e.g., a single core CPU), a multi-core processor (e.g., a multi-core CPU, an XPU, etc.)). For example, the programmable circuitry may be a CPU and/or an FPGA located in the same package (e.g., the same integrated circuit (IC) package or in two or more separate housings), one or more processors in a single machine, multiple processors distributed across multiple servers of a server rack, multiple processors distributed across one or more server racks, etc., and/or any combination(s) thereof.

The machine readable instructions described herein may be stored in one or more of a compressed format, an encrypted format, a fragmented format, a compiled format, an executable format, a packaged format, etc. Machine readable instructions as described herein may be stored as data (e.g., computer-readable data, machine-readable data, one or more bits (e.g., one or more computer-readable bits, one or more machine-readable bits, etc.), a bitstream (e.g., a computer-readable bitstream, a machine-readable bitstream, etc.), etc.)

or a data structure (e.g., as portion(s) of instructions, code, representations of code, etc.) that may be utilized to create, manufacture, and/or produce machine executable instructions. For example, the machine readable instructions may be fragmented and stored on one or more storage devices, disks and/or computing devices (e.g., servers) located at the same or different locations of a network or collection of networks (e.g., in the cloud, in edge devices, etc.). The machine readable instructions may require one or more of installation, modification, adaptation, updating, combining, supplementing, configuring, decryption, decompression, unpacking, distribution, reassignment, compilation, etc., in order to make them directly readable, interpretable, and/or executable by a computing device and/or other machine. For example, the machine readable instructions may be stored in multiple parts, which are individually compressed, encrypted, and/or stored on separate computing devices, wherein the parts when decrypted, decompressed, and/or combined form a set of computer-executable and/or machine executable instructions that implement one or more functions and/or operations that may together form a program such as that described herein.

In another example, the machine readable instructions may be stored in a state in which they may be read by programmable circuitry, but require addition of a library (e.g., a dynamic link library (DLL)), a software development kit (SDK), an application programming interface (API), etc., in order to execute the machine-readable instructions on a particular computing device or other device. In another example, the machine readable instructions may need to be configured (e.g., settings stored, data input, network addresses recorded, etc.) before the machine readable instructions and/or the corresponding program(s) can be executed in whole or in part. Thus, machine readable, computer readable and/or machine readable media, as used herein, may include instructions and/or program(s) regardless of the particular format or state of the machine readable instructions and/or program(s).

The machine readable instructions described herein can be represented by any past, present, or future instruction language, scripting language, programming language, etc. For example, the machine readable instructions may be represented using any of the following languages: C, C++, Java, C#, Perl, Python, JavaScript, HyperText Markup Language (HTML), Structured Query Language (SQL), Swift, etc.

As mentioned above, the example operations of FIGS. 7-11 may be implemented using executable instructions (e.g., computer readable and/or machine readable instructions) stored on one or more non-transitory computer readable and/or machine readable media. As used herein, the terms non-transitory computer readable medium, non-transitory computer readable storage medium, non-transitory machine readable medium, and/or non-transitory machine readable storage medium are expressly defined to include any type of computer readable storage device and/or storage disk and to exclude propagating signals and to exclude transmission media. Examples of such non-transitory computer readable medium, non-transitory computer readable storage medium, non-transitory machine readable medium, and/or non-transitory machine readable storage medium include optical storage devices, magnetic storage devices, an HDD, a flash memory, a read-only memory (ROM), a CD, a DVD, a cache, a RAM of any type, a register, and/or any other storage device or storage disk in which information is stored for any duration (e.g., for extended time periods, permanently, for brief instances, for temporarily buffering, and/or for caching of the information). As used herein, the terms "non-transitory computer readable storage device" and "non-transitory machine readable storage device" are defined to include any physical (mechanical, magnetic and/or electrical) hardware to retain information for a time period, but to exclude propagating signals and to exclude transmission media. Examples of non-transitory computer readable storage devices and/or non-transitory machine readable storage devices include random access memory of any type, read only memory of any type, solid state memory, flash memory, optical discs, magnetic disks, disk drives, and/or redundant array of independent disks (RAID) systems. As used herein, the term "device" refers to physical structure such as mechanical and/or electrical equipment, hardware, and/or circuitry that may or may not be configured by computer readable instructions, machine readable instructions, etc., and/or manufactured to execute computer-readable instructions, machine-readable instructions, etc.

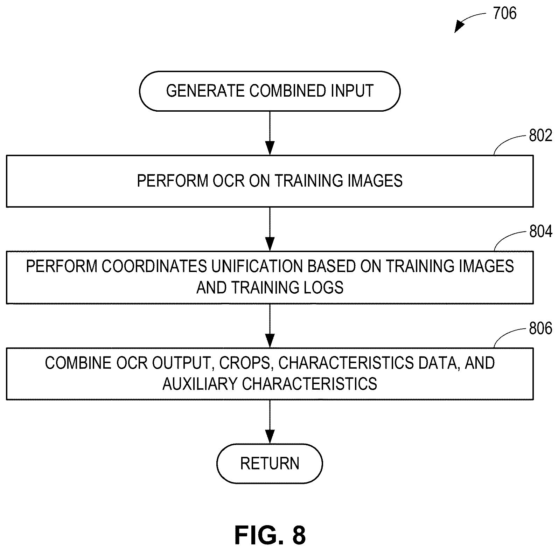

FIG. 7 is a flowchart representative of example machine readable instructions and/or example operations 700 that may be executed, instantiated, and/or performed by programmable circuitry to label data. The example machine-readable instructions and/or the example operations 700 of FIG. 7 begin at block 702, at which the example data acquisition circuitry 602 acquires candidate training data and acquires auxiliary characteristics data (block 704). The example combination circuitry 604 generates a combined input (block 706), as described in further detail in connection with FIG. 8. As described above and in further detail below, a data structure or storage device is populated with combined crops input, OCR input, available label input and/or characteristics to assist in model training.

The example unlink circuitry 314 generates an unlinked input path (block 708) to facilitate an input stream that the model can use for parameter tuning/learning. The example distant supervision circuitry 318 performs distant supervision analysis/modeling based on the unlinked and/or otherwise deconstructed input streams (block 710), and the evaluation circuitry 322 compares the output of the distant supervision model with the linked training data (e.g., ground truth data) (block 712), and calculates KPIs (block 714) that are used to determine whether one or more stopping criteria have been reached for parameter tuning purposes. The example distant supervision circuitry 318 updates the model parameters 320 based on the KPIs (block 716), and determines whether distant supervision modeling optimization efforts should continue (block 718). If so, the process 700 returns to block 702, otherwise the merge pipeline circuitry 206 generates the merged pipeline 500 (block 720), as described above in connection with FIG. 5.

FIG. 8 includes additional detail corresponding to the generation of combined input of block 706 in FIG. 7. In the illustrated example of FIG. 8, the OCR circuitry 308 performs OCR operations on training images to extract text data and text polygons (e.g., bounding boxes) (block 802). The example combination circuitry 604 performs coordinates unification based on the training images (crops) and training logs (block 804), and combines the OCR output, the crops, the available characteristics data, and available auxiliary characteristics to a data structure (block 806).

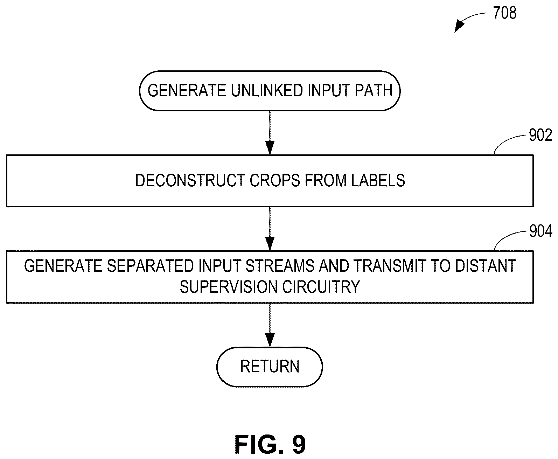

FIG. 9 includes additional detail corresponding to the generation of unlinked input paths of block 708 in FIG. 7. In the illustrated example of FIG. 9, the unlink circuitry 314 deconstructs and/or otherwise separates label data from crops data (block 902), and generates separated input streams corresponding to each (block 904). As described above, the isolated and/or otherwise separated input streams provided as input to the distant supervision model permit parameter tuning of the model.

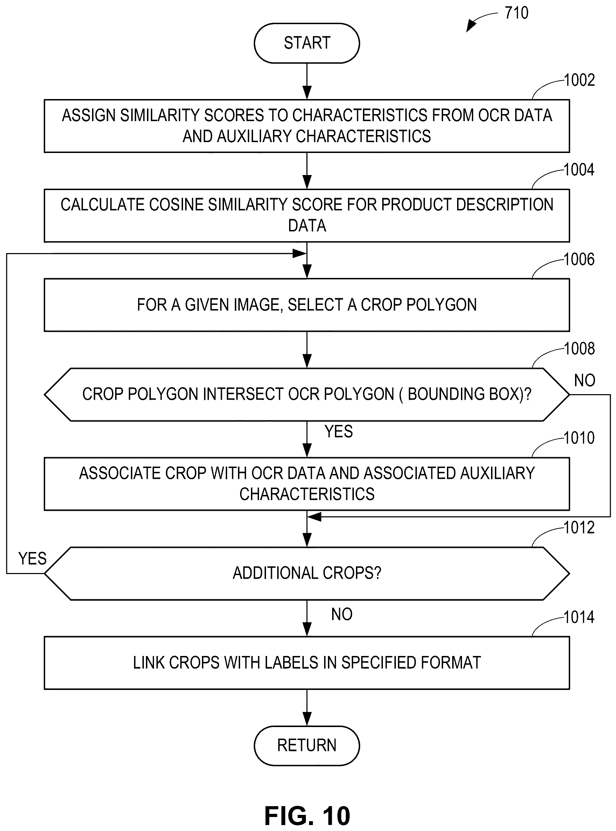

FIG. 10 includes additional detail corresponding to the distant supervision modeling of block 710 of FIG. 7. In the illustrated example of FIG. 10, the distant supervision circuitry 318 assigns similarity scores to characteristics from OCR data and auxiliary characteristics (block 1002), and calculates similarity scores (e.g., cosine similarity scores) for product description data (block 1004). The distant supervision circuitry 318 selects a crop polygon associated with an image to be analyzed (e.g., a digitized leaflet) (block 1006), and determines whether the selected crop polygon also intersects one or more OCR polygons (e.g., bounding boxes) (block 1008). If so, the distant supervision circuitry 318 associates the crop corresponding to the selected crop polygon with the text data corresponding to the intersecting OCR polygon and auxiliary characteristics (block 1010). The distant supervision circuitry 318 determines whether additional crops of the selected image are to be analyzed (block 1012) and, if so, the program 710 returns to block 1006.

When all crop polygons have been considered and/or otherwise analyzed (block 1012), the distant supervision circuitry 318 links the crops with label data corresponding to associations based on the identified intersections of polygons (block 1014). Additionally, the distant supervision circuitry 318 generates the labeled data in a manner consistent with formatting needs/expectations of the example model training circuitry 106.

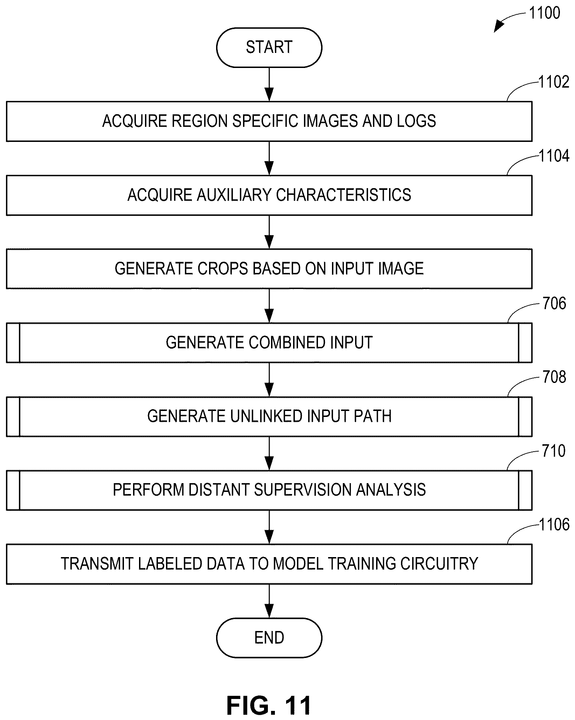

FIG. 11 is a flowchart representative of example machine readable instructions and/or example operations 1100 that may be executed, instantiated, and/or performed by programmable circuitry to execute the merged pipeline 500 of FIG. 5. In the illustrated example of FIG. 11, the example data acquisition circuitry 602 acquires region specific images and logs (block 1102) and auxiliary characteristics (block 1104). The example active learning circuitry 406 generates crops based on a digitized input image (block 1105), such as legacy labeled data used in a region of interest with a prior or legacy modeling system. The example combination circuitry 604 generates a combined input data structure to capture and/or otherwise cultivate all available characteristics data (e.g., metadata associated with products, product identifiers, etc.) in a manner consistent with block 706 of FIG. 8. Additionally, the example unlink circuitry 314 generates unliked input paths in a manner consistent with block 708 of FIG. 9 to facilitate the generation of separated (e.g., deconstructed) input streams for model parameter tuning. The example distant supervision circuitry 318 executes the distant supervision model based on the unlinked input data in a manner consistent with block 710 of FIG. 10, and the merge pipeline circuitry 206 transmits results of the distant supervision model (e.g., labeled data in a format that aligns with particular expectations or requirements) to the model training circuitry 106 (block 1106).

FIG. 12 is a block diagram of an example programmable circuitry platform 1200 structured to execute and/or instantiate the example machine-readable instructions and/or the example operations of FIGS. 7-11 to implement the data label circuitry 104 of FIGS. 2 and 6. The programmable circuitry platform 1200 can be, for example, a server, a personal computer, a workstation, a self-learning machine (e.g., a neural network), an Internet appliance, a gaming console, a set top box, a headset (e.g., an augmented reality (AR) headset, a virtual reality (VR) headset, etc.) or other wearable device, or any other type of computing and/or electronic device.

The programmable circuitry platform 1200 of the illustrated example includes programmable circuitry 1212. The programmable circuitry 1212 of the illustrated example is hardware. For example, the programmable circuitry 1212 can be implemented by one or more integrated circuits, logic circuits, FPGAs, microprocessors, CPUs, GPUs, DSPs, and/or microcontrollers from any desired family or manufacturer. The programmable circuitry 1212 may be implemented by one or more semiconductor based (e.g., silicon based) devices. In this example, the programmable circuitry 1212 implements the example OCR circuitry 308, the example unlink circuitry 314, the example distant supervision circuitry 318, the example data acquisition circuitry 602, the example combination circuitry 604, the example evaluation circuitry 322, the example distant supervision pipeline circuitry 202, the example active learning circuitry 406, the example active learning pipeline circuitry 204, the example merge pipeline circuitry 206, and the example data label circuitry 104.

The programmable circuitry 1212 of the illustrated example includes a local memory 1213 (e.g., a cache, registers, etc.). The programmable circuitry 1212 of the illustrated example is in communication with main memory 1214, 1216, which includes a volatile memory 1214 and a non-volatile memory 1216, by a bus 1218. The volatile memory 1214 may be implemented by Synchronous Dynamic Random Access Memory (SDRAM), Dynamic Random Access Memory (DRAM), RAMBUS® Dynamic Random Access Memory (RDRAM®), and/or any other type of RAM device. The non-volatile memory 1216 may be implemented by flash memory and/or any other desired type of memory device. Access to the main memory 1214, 1216 of the illustrated example is controlled by a memory controller 1217. In some examples, the memory controller 1217 may be implemented by one or more integrated circuits, logic circuits, microcontrollers from any desired family or manufacturer, or any other type of circuitry to manage the flow of data going to and from the main memory 1214, 1216.

The programmable circuitry platform 1200 of the illustrated example also includes interface circuitry 1220. The interface circuitry 1220 may be implemented by hardware in accordance with any type of interface standard, such as an Ethernet interface, a universal serial bus (USB) interface, a Bluetooth® interface, a near field communication (NFC) interface, a Peripheral Component Interconnect (PCI) interface, and/or a Peripheral Component Interconnect Express (PCIe) interface.

In the illustrated example, one or more input devices 1222 are connected to the interface circuitry 1220. The input device(s) 1222 permit(s) a user (e.g., a human user, a machine user, etc.) to enter data and/or commands into the programmable circuitry 1212. The input device(s) 1222 can be implemented by, for example, an audio sensor, a microphone, a camera (still or video), a keyboard, a button, a mouse, a touchscreen, a trackpad, a trackball, an isopoint device, and/or a voice recognition system.

One or more output devices 1224 are also connected to the interface circuitry 1220 of the illustrated example. The output device(s) 1224 can be implemented, for example, by display devices (e.g., a light emitting diode (LED), an organic light emitting diode (OLED), a liquid crystal display (LCD), a cathode ray tube (CRT) display, an in-place switching (IPS) display, a touchscreen, etc.), a tactile output device, a printer, and/or speaker. The interface circuitry 1220 of the illustrated example, thus, typically includes a graphics driver card, a graphics driver chip, and/or graphics processor circuitry such as a GPU.

The interface circuitry 1220 of the illustrated example also includes a communication device such as a transmitter, a receiver, a transceiver, a modem, a residential gateway, a wireless access point, and/or a network interface to facilitate exchange of data with external machines (e.g., computing devices of any kind) by a network 1226. The communication can be by, for example, an Ethernet connection, a digital subscriber line (DSL) connection, a telephone line connection, a coaxial cable system, a satellite system, a beyond-line-of-sight wireless system, a line-of-sight wireless system, a cellular telephone system, an optical connection, etc.

The programmable circuitry platform 1200 of the illustrated example also includes one or more mass storage discs or devices 1228 to store firmware, software, and/or data. Examples of such mass storage discs or devices 1228 include magnetic storage devices (e.g., floppy disk, drives, HDDs, etc.), optical storage devices (e.g., Blu-ray disks, CDs, DVDs, etc.), RAID systems, and/or solid-state storage discs or devices such as flash memory devices and/or SSDs.

The machine readable instructions 1232, which may be implemented by the machine readable instructions of FIGS. 7-11, may be stored in the mass storage device 1228, in the volatile memory 1214, in the non-volatile memory 1216, and/or on at least one non-transitory computer readable storage medium such as a CD or DVD which may be removable.

FIG. 13 is a block diagram of an example implementation of the programmable circuitry 1212 of FIG. 12. In this example, the programmable circuitry 1212 of FIG. 12 is implemented by a microprocessor 1300. For example, the microprocessor 1300 may be a general-purpose microprocessor (e.g., general-purpose microprocessor circuitry). The microprocessor 1300 executes some or all of the machine-readable instructions of the flowcharts of FIGS. 7-11 to effectively instantiate the circuitry of FIGS. 2 and 6 as logic circuits to perform operations corresponding to those machine readable instructions. In some such examples, the circuitry of FIGS. 2 and 6 is instantiated by the hardware circuits of the microprocessor 1300 in combination with the machine-readable instructions. For example, the microprocessor 1300 may be implemented by multi-core hardware circuitry such as a CPU, a DSP, a GPU, an XPU, etc. Although it may include any number of example cores 1302 (e.g., 1 core), the microprocessor 1300 of this example is a multi-core semiconductor device including N cores. The cores 1302 of the microprocessor 1300 may operate independently or may cooperate to execute machine readable instructions. For example, machine code corresponding to a firmware program, an embedded software program, or a software program may be executed by one of the cores 1302 or may be executed by multiple ones of the cores 1302 at the same or different times. In some examples, the machine code corresponding to the firmware program, the embedded software program, or the software program is split into threads and executed in parallel by two or more of the cores 1302. The software program may correspond to a portion or all of the machine readable instructions and/or operations represented by the flowcharts of FIGS. 7-11.

The cores 1302 may communicate by a first example bus 1304. In some examples, the first bus 1304 may be implemented by a communication bus to effectuate communication associated with one(s) of the cores 1302. For example, the first bus 1304 may be implemented by at least one of an Inter-Integrated Circuit (I2C) bus, a Serial Peripheral Interface (SPI) bus, a PCI bus, or a PCIe bus. Additionally or alternatively, the first bus 1304 may be implemented by any other type of computing or electrical bus. The cores 1302 may obtain data, instructions, and/or signals from one or more external devices by example interface circuitry 1306. The cores 1302 may output data, instructions, and/or signals to the one or more external devices by the interface circuitry 1306. Although the cores 1302 of this example include example local memory 1320 (e.g., Level 1 (L1) cache that may be split into an L1 data cache and an L1 instruction cache), the microprocessor 1300 also includes example shared memory 1310 that may be shared by the cores (e.g., Level 2 (L2 cache)) for high-speed access to data and/or instructions. Data and/or instructions may be transferred (e.g., shared) by writing to and/or reading from the shared memory 1310. The local memory 1320 of each of the cores 1302 and the shared memory 1310 may be part of a hierarchy of storage devices including multiple levels of cache memory and the main memory (e.g., the main memory 1214, 1216 of FIG. 12). Typically, higher levels of memory in the hierarchy exhibit lower access time and have smaller storage capacity than lower levels of memory. Changes in the various levels of the cache hierarchy are managed (e.g., coordinated) by a cache coherency policy.

Each core 1302 may be referred to as a CPU, DSP, GPU, etc., or any other type of hardware circuitry. Each core 1302 includes control unit circuitry 1314, arithmetic and logic (AL) circuitry (sometimes referred to as an ALU) 1316, a plurality of registers 1318, the local memory 1320, and a second example bus 1322. Other structures may be present. For example, each core 1302 may include vector unit circuitry, single instruction multiple data (SIMD) unit circuitry, load/store unit (LSU) circuitry, branch/jump unit circuitry, floating-point unit (FPU) circuitry, etc. The control unit circuitry 1314 includes semiconductor-based circuits structured to control (e.g., coordinate) data movement within the corresponding core 1302. The AL circuitry 1316 includes semiconductor-based circuits structured to perform one or more mathematic and/or logic operations on the data within the corresponding core 1302. The AL circuitry 1316 of some examples performs integer based operations. In other examples, the AL circuitry 1316 also performs floating-point operations. In yet other examples, the AL circuitry 1316 may include first AL circuitry that performs integer-based operations and second AL circuitry that performs floating-point operations. In some examples, the AL circuitry 1316 may be referred to as an Arithmetic Logic Unit (ALU).

The registers 1318 are semiconductor-based structures to store data and/or instructions such as results of one or more of the operations performed by the AL circuitry 1316 of the corresponding core 1302. For example, the registers 1318 may include vector register(s), SIMD register(s), general-purpose register(s), flag register(s), segment register(s), machine-specific register(s), instruction pointer register(s), control register(s), debug register(s), memory management register(s), machine check register(s), etc. The registers 1318 may be arranged in a bank as shown in FIG. 13. Alternatively, the registers 1318 may be organized in any other arrangement, format, or structure, such as by being distributed throughout the core 1302 to shorten access time. The second bus 1322 may be implemented by at least one of an I2C bus, a SPI bus, a PCI bus, or a PCIe bus.

Each core 1302 and/or, more generally, the microprocessor 1300 may include additional and/or alternate structures to those shown and described above. For example, one or more clock circuits, one or more power supplies, one or more power gates, one or more cache home agents (CHAs), one or more converged/common mesh stops (CMSs), one or more shifters (e.g., barrel shifter(s)) and/or other circuitry may be present. The microprocessor 1300 is a semiconductor device fabricated to include many transistors interconnected to implement the structures described above in one or more integrated circuits (ICs) contained in one or more packages.

The microprocessor 1300 may include and/or cooperate with one or more accelerators (e.g., acceleration circuitry, hardware accelerators, etc.). In some examples, accelerators are implemented by logic circuitry to perform certain tasks more quickly and/or efficiently than can be done by a general-purpose processor. Examples of accelerators include ASICs and FPGAs such as those discussed herein. A GPU, DSP and/or other programmable device can also be an accelerator. Accelerators may be on-board the microprocessor 1300, in the same chip package as the microprocessor 1300 and/or in one or more separate packages from the microprocessor 1300.

FIG. 14 is a block diagram of another example implementation of the programmable circuitry 1212 of FIG. 12. In this example, the programmable circuitry 1212 is implemented by FPGA circuitry 1400. For example, the FPGA circuitry 1400 may be implemented by an FPGA. The FPGA circuitry 1400 can be used, for example, to perform operations that could otherwise be performed by the example microprocessor 1300 of FIG. 13 executing corresponding machine readable instructions. However, once configured, the FPGA circuitry 1400 instantiates the operations and/or functions corresponding to the machine readable instructions in hardware and, thus, can often execute the operations/functions faster than they could be performed by a general-purpose microprocessor executing the corresponding software.

More specifically, in contrast to the microprocessor 1300 of FIG. 13 described above (which is a general purpose device that may be programmed to execute some or all of the machine readable instructions represented by the flowchart(s) of FIGS. 7-11 but whose interconnections and logic circuitry are fixed once fabricated), the FPGA circuitry 1400 of the example of FIG. 14 includes interconnections and logic circuitry that may be configured, structured, programmed, and/or interconnected in different ways after fabrication to instantiate, for example, some or all of the operations/functions corresponding to the machine readable instructions represented by the flowchart(s) of FIGS. 7-11. In particular, the FPGA circuitry 1400 may be thought of as an array of logic gates, interconnections, and switches. The switches can be programmed to change how the logic gates are interconnected by the interconnections, effectively forming one or more dedicated logic circuits (unless and until the FPGA circuitry 1400 is reprogrammed). The configured logic circuits enable the logic gates to cooperate in different ways to perform different operations on data received by input circuitry. Those operations may correspond to some or all of the instructions (e.g., the software and/or firmware) represented by the flowchart(s) of FIGS. 7-11. As such, the FPGA circuitry 1400 may be configured and/or structured to effectively instantiate some or all of the operations/functions corresponding to the machine readable instructions of the flowchart(s) of FIGS. 7-11 as dedicated logic circuits to perform the operations/functions corresponding to those software instructions in a dedicated manner analogous to an ASIC. Therefore, the FPGA circuitry 1400 may perform the operations/functions corresponding to the some or all of the machine readable instructions of FIGS. 7-11 faster than the general-purpose microprocessor can execute the same.

In the example of FIG. 14, the FPGA circuitry 1400 is configured and/or structured in response to being programmed (and/or reprogrammed one or more times) based on a binary file. In some examples, the binary file may be compiled and/or generated based on instructions in a hardware description language (HDL) such as Lucid, Very High Speed Integrated Circuits (VHSIC) Hardware Description Language (VHDL), or Verilog. For example, a user (e.g., a human user, a machine user, etc.) may write code or a program corresponding to one or more operations/functions in an HDL; the code/program may be translated into a low-level language as needed; and the code/program (e.g., the code/program in the low-level language) may be converted (e.g., by a compiler, a software application, etc.) into the binary file. In some examples, the FPGA circuitry 1400 of FIG. 14 may access and/or load the binary file to cause the FPGA circuitry 1400 of FIG. 14 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1400 of FIG. 14 to cause configuration and/or structuring of the FPGA circuitry 1400 of FIG. 14, or portion(s) thereof.

of.

In some examples, the binary file is compiled, generated, transformed, and/or otherwise output from a uniform software platform utilized to program FPGAs. For example, the uniform software platform may translate first instructions (e.g., code or a program) that correspond to one or more operations/functions in a high-level language (e.g., C, C++, Python, etc.) into second instructions that correspond to the one or more operations/functions in an HDL. In some such examples, the binary file is compiled, generated, and/or otherwise output from the uniform software platform based on the second instructions. In some examples, the FPGA circuitry 1400 of FIG. 14 may access and/or load the binary file to cause the FPGA circuitry 1400 of FIG. 14 to be configured and/or structured to perform the one or more operations/functions. For example, the binary file may be implemented by a bit stream (e.g., one or more computer-readable bits, one or more machine-readable bits, etc.), data (e.g., computer-readable data, machine-readable data, etc.), and/or machine-readable instructions accessible to the FPGA circuitry 1400 of FIG. 14 to cause configuration and/or structuring of the FPGA circuitry 1400 of FIG. 14, or portion(s) thereof.

The FPGA circuitry 1400 of FIG. 14, includes example input/output (I/O) circuitry 1402 to obtain and/or output data to/from example configuration circuitry 1404 and/or external hardware 1406. For example, the configuration circuitry 1404 may be implemented by interface circuitry that may obtain a binary file, which may be implemented by a bit stream, data, and/or machine-readable instructions, to configure the FPGA circuitry 1400, or portion(s) thereof. In some such examples, the configuration circuitry 1404 may obtain the binary file from a user, a machine (e.g., hardware circuitry (e.g., programmable or dedicated circuitry) that may implement an Artificial Intelligence/Machine Learning (AI/ML) model to generate the binary file), etc., and/or any combination(s) thereof). In some examples, the external hardware 1406 may be implemented by external hardware circuitry. For example, the external hardware 1406 may be implemented by the microprocessor 1300 of FIG. 13.

The FPGA circuitry 1400 also includes an array of example logic gate circuitry 1408, a plurality of example configurable interconnections 1410, and example storage circuitry 1412. The logic gate circuitry 1408 and the configurable interconnections 1410 are configurable to instantiate one or more operations/functions that may correspond to at least some of the machine readable instructions of FIGS. 7-11 and/or other desired operations. The logic gate circuitry 1408 shown in FIG. 14 is fabricated in blocks or groups. Each block includes semiconductor-based electrical structures that may be configured into logic circuits. In some examples, the electrical structures include logic gates (e.g., And gates, Or gates, Nor gates, etc.) that provide basic building blocks for logic circuits. Electrically controllable switches (e.g., transistors) are present within each of the logic gate circuitry 1408 to enable configuration of the electrical structures and/or the logic gates to form circuits to perform desired operations/functions. The logic gate circuitry 1408 may include other electrical structures such as look-up tables (LUTs), registers (e.g., flip-flops or latches), multiplexers, etc.

The configurable interconnections 1410 of the illustrated example are conductive pathways, traces, vias, or the like that may include electrically controllable switches (e.g., transistors) whose state can be changed by programming (e.g., using an HDL instruction language) to activate or deactivate one or more connections between one or more of the logic gate circuitry 1408 to program desired logic circuits.

The storage circuitry 1412 of the illustrated example is structured to store result(s) of the one or more of the operations performed by corresponding logic gates. The storage circuitry 1412 may be implemented by registers or the like. In the illustrated example, the storage circuitry 1412 is distributed amongst the logic gate circuitry 1408 to facilitate access and increase execution speed.

The example FPGA circuitry 1400 of FIG. 14 also includes example dedicated operations circuitry 1414. In this example, the dedicated operations circuitry 1414 includes special purpose circuitry 1416 that may be invoked to implement commonly used functions to avoid the need to program those functions in the field. Examples of such special purpose circuitry 1416 include memory (e.g., DRAM) controller circuitry, PCIe controller circuitry, clock circuitry, transceiver circuitry, memory, and multiplier-accumulator circuitry. Other types of special purpose circuitry may be present. In some examples, the FPGA circuitry 1400 may also include example general purpose programmable circuitry 1418 such as an example CPU 1420 and/or an example DSP 1422. Other general purpose programmable circuitry 1418 may additionally or alternatively be present such as a GPU, an XPU, etc., that can be programmed to perform other operations.

Although FIGS. 13 and 14 illustrate two example implementations of the programmable circuitry 1212 of FIG. 12, many other approaches are contemplated. For example, FPGA circuitry may include an on-board CPU, such as one or more of the example CPU 1420 of FIG. 13. Therefore, the programmable circuitry 1212 of FIG. 12 may additionally be implemented by combining at least the example microprocessor 1300 of FIG. 13 and the example FPGA circuitry 1400 of FIG. 14. In some such hybrid examples, one or more cores 1302 of FIG. 13 may execute a first portion of the machine readable instructions represented by the flowchart(s) of FIGS. 7-11 to perform first operation(s)/function(s), the FPGA circuitry 1400 of FIG. 14 may be configured and/or structured to perform second operation(s)/function(s) corresponding to a second portion of the machine readable instructions represented by the flowcharts of FIGS. 7-11, and/or an ASIC may be configured and/or structured to perform third operation(s)/function(s) corresponding to a third portion of the machine readable instructions represented by the flowcharts of FIGS. 7-11.

It should be understood that some or all of the circuitry of FIGS. 2 and 6 may, thus, be instantiated at the same or different times. For example, same and/or different portion(s) of the microprocessor 1300 of FIG. 13 may be programmed to execute portion(s) of machine-readable instructions at the same and/or different times. In some examples, same and/or different portion(s) of the FPGA circuitry 1400 of FIG. 14 may be configured and/or structured to perform operations/functions corresponding to portion(s) of machine-readable instructions at the same and/or different times.

In some examples, some or all of the circuitry of FIGS. 2 and 6 may be instantiated, for example, in one or more threads executing concurrently and/or in series. For example, the microprocessor 1300 of FIG. 13 may execute machine readable instructions in one or more threads executing concurrently and/or in series. In some examples, the FPGA circuitry 1400 of FIG. 14 may be configured and/or structured to carry out operations/functions concurrently and/or in series. Moreover, in some examples, some or all of the circuitry of FIGS. 2 and 6 may be implemented within one or more virtual machines and/or containers executing on the microprocessor 1300 of FIG. 13.

In some examples, the programmable circuitry 1212 of FIG. 12 may be in one or more packages. For example, the microprocessor 1300 of FIG. 13 and/or the FPGA circuitry 1400 of FIG. 14 may be in one or more packages. In some examples, an XPU may be implemented by the programmable circuitry 1212 of FIG. 12, which may be in one or more packages. For example, the XPU may include a CPU (e.g., the microprocessor 1300 of FIG. 13, the CPU 1420 of FIG. 14, etc.) in one package, a DSP (e.g., the DSP 1422 of FIG. 14) in another package, a GPU in yet another package, and an FPGA (e.g., the FPGA circuitry 1400 of FIG. 14) in still yet another package.

A block diagram illustrating an example software distribution platform 1505 to distribute software such as the example machine readable instructions 1232 of FIG. 12 to other hardware devices (e.g., hardware devices owned and/or operated by third parties from the owner and/or operator of the software distribution platform) is illustrated in FIG. 15. The example software distribution platform 1505 may be implemented by any computer server, data facility, cloud service, etc., capable of storing and transmitting software to other computing devices. The third parties may be customers of the entity owning and/or operating the software distribution platform 1505. For example, the entity that owns and/or operates the software distribution platform 1505 may be a developer, a seller, and/or a licensor of software such as the example machine readable instructions 1232 of FIG. 12. The third parties may be consumers, users, retailers, OEMs, etc., who purchase and/or license the software for use and/or re-sale and/or sub-licensing. In the illustrated example, the software distribution platform 1505 includes one or more servers and one or more storage devices. The storage devices store the machine readable instructions 1232, which may correspond to the example machine readable instructions of FIGS. 7-11, as described above. The one or more servers of the example software distribution platform 1505 are in communication with an example network 1510, which may correspond to any one or more of the Internet and/or any of the example networks described above. In some examples, the one or more servers are responsive to requests to transmit the software to a requesting party as part of a commercial transaction. Payment for the delivery, sale, and/or license of the software may be handled by the one or more servers of the software distribution platform and/or by a third party payment entity. The servers enable purchasers and/or licensors to download the machine readable instructions 1232 from the software distribution platform 1505. For example, the software, which may correspond to the example machine readable instructions of FIGS. 7-11, may be downloaded to the example programmable circuitry platform 1200, which is to execute the machine readable instructions 1232 to implement the data label circuitry 104. In some examples, one or more servers of the software distribution platform 1505 periodically offer, transmit, and/or force updates to the software (e.g., the example machine readable instructions 1232 of FIG. 12) to ensure improvements, patches, updates, etc., are distributed and applied to the software at the end user devices. Although referred to as software above, the distributed "software" could alternatively be firmware.

"Including" and "comprising" (and all forms and tenses thereof) are used herein to be open ended terms. Thus, whenever a claim employs any form of "include" or "comprise" (e.g., comprises, includes, comprising, including, having, etc.) as a preamble or within a claim recitation of any kind, it is to be understood that additional elements, terms, etc., may be present without falling outside the scope of the corresponding claim or recitation. As used herein, when the phrase "at least" is used as the transition term in, for example, a preamble of a claim, it is open-ended in the same manner as the term "comprising" and "including" are open ended. The term "and/or" when used, for example, in a form such as A, B, and/or C refers to any combination or subset of A, B, C such as (1) A alone, (2) B alone, (3) C alone, (4) A with B, (5) A with C, (6) B with C, or (7) A with B and with C. As used herein in the context of describing structures, components, items, objects and/or things, the phrase "at least one of A and B" is intended to refer to implementations including any of (1) at least one A, (2) at least one B, or (3) at least one A and at least one B. Similarly, as used herein in the context of describing structures, components, items, objects and/or things, the phrase "at least one of A or B" is intended to refer to implementations including any of (1) at least one A, (2) at least one B, or (3) at least one A and at least one B. As used herein in the context of describing the performance or execution of processes, instructions, actions, activities, etc., the phrase "at least one of A and B" is intended to refer to implementations including any of (1) at least one A, (2) at least one B, or (3) at least one A and at least one B. Similarly, as used herein in the context of describing the performance or execution of processes, instructions, actions, activities, etc., the phrase "at least one of A or B" is intended to refer to implementations including any of (1) at least one A, (2) at least one B, or (3) at least one A and at least one B.

As used herein, singular references (e.g., "a", "an", "first", "second", etc.) do not exclude a plurality. The term "a" or "an" object, as used herein, refers to one or more of that object. The terms "a" (or "an"), "one or more", and "at least one" are used interchangeably herein. Furthermore, although individually listed, a plurality of means, elements, or actions may be implemented by, e.g., the same entity or object. Additionally, although individual features may be included in different examples or claims, these may possibly be combined, and the inclusion in different examples or claims does not imply that a combination of features is not feasible and/or advantageous.

As used herein, unless otherwise stated, the term "above" describes the relationship of two parts relative to Earth. A first part is above a second part, if the second part has at least one part between Earth and the first part. Likewise, as used herein, a first part is "below" a second part when the first part is closer to the Earth than the second part. As noted above, a first part can be above or below a second part with one or more of: other parts therebetween, without other parts therebetween, with the first and second parts touching, or without the first and second parts being in direct contact with one another.

As used in this patent, stating that any part (e.g., a layer, film, area, region, or plate) is in any way on (e.g., positioned on, located on, disposed on, or formed on, etc.) another part, indicates that the referenced part is either in contact with the other part, or that the referenced part is above the other part with one or more intermediate part(s) located therebetween.

As used herein, connection references (e.g., attached, coupled, connected, and joined) may include intermediate members between the elements referenced by the connection reference and/or relative movement between those elements unless otherwise indicated. As such, connection references do not necessarily infer that two elements are directly connected and/or in fixed relation to each other. As used herein, stating that any part is in "contact" with another part is defined to mean that there is no intermediate part between the two parts.

Unless specifically stated otherwise, descriptors such as "first," "second," "third," etc., are used herein without imputing or otherwise indicating any meaning of priority, physical order, arrangement in a list, and/or ordering in any way, but are merely used as labels and/or arbitrary names to distinguish elements for ease of understanding the disclosed examples. In some examples, the descriptor "first" may be used to refer to an element in the detailed description, while the same element may be referred to in a claim with a different descriptor such as "second" or "third." In such instances, it should be understood that such descriptors are used merely for identifying those elements distinctly within the context of the discussion (e.g., within a claim) in which the elements might, for example, otherwise share a same name.

As used herein, "approximately" and "about" modify their subjects/values to recognize the potential presence of variations that occur in real world applications. For example, "approximately" and "about" may modify dimensions that may not be exact due to manufacturing tolerances and/or other real world imperfections as will be understood by persons of ordinary skill in the art. For example, "approximately" and "about" may indicate such dimensions may be within a tolerance range of +/- 10% unless otherwise specified herein.

As used herein "substantially real time" refers to occurrence in a near instantaneous manner recognizing there may be real world delays for computing time, transmission, etc. Thus, unless otherwise specified, "substantially real time" refers to real time +/- 1 second.

As used herein, the phrase "in communication," including variations thereof, encompasses direct communication and/or indirect communication through one or more intermediary components, and does not require direct physical (e.g., wired) communication and/or constant communication, but rather additionally includes selective communication at periodic intervals, scheduled intervals, aperiodic intervals, and/or one-time events.

As used herein, "programmable circuitry" is defined to include (i) one or more special purpose electrical circuits (e.g., an application specific circuit (ASIC)) structured to perform specific operation(s) and including one or more semiconductor-based logic devices (e.g., electrical hardware implemented by one or more transistors), and/or (ii) one or more general purpose semiconductor-based electrical circuits programmable with instructions to perform specific functions(s) and/or operation(s) and including one or more semiconductor-based logic devices (e.g., electrical hardware implemented by one or more transistors). Examples of programmable circuitry include programmable microprocessors such as Central Processor Units (CPUs) that may execute first instructions to perform one or more operations and/or functions, Field Programmable Gate Arrays (FPGAs) that may be programmed with second instructions to cause configuration and/or structuring of the FPGAs to instantiate one or more operations and/or functions corresponding to the first instructions, Graphics Processor Units (GPUs) that may execute first instructions to perform one or more operations and/or functions, Digital Signal Processors (DSPs) that may execute first instructions to perform one or more operations and/or functions, XPUs, Network Processing Units (NPUs) one or more microcontrollers that may execute first instructions to perform one or more operations and/or functions and/or integrated circuits such as Application Specific Integrated Circuits (ASICs). For example, an XPU may be implemented by a heterogeneous computing system including multiple types of programmable circuitry (e.g., one or more FPGAs, one or more CPUs, one or more GPUs, one or more NPUs, one or more DSPs, etc., and/or any combination(s) thereof), and orchestration technology (e.g., application programming interface(s) (API(s)) that may assign computing task(s) to whichever one(s) of the multiple types of programmable circuitry is/are suited and available to perform the computing task(s).

As used herein integrated circuit/circuitry is defined as one or more semiconductor packages containing one or more circuit elements such as transistors, capacitors, inductors, resistors, current paths, diodes, etc. For example an integrated circuit may be implemented as one or more of an ASIC, an FPGA, a chip, a microchip, programmable circuitry, a semiconductor substrate coupling multiple circuit elements, a system on chip (SoC), etc.

From the foregoing, it will be appreciated that example systems, apparatus, articles of manufacture, and methods have been disclosed that generate training data in a manner that aligns with expectations and/or formatting requirements of machine learning training systems. Examples disclosed herein utilize distant supervision modeling approaches to generate training data that reduces instances of thrown exceptions by machine learning modeling circuitry that would otherwise occur based on brute force application of legacy training data to a new machine learning training model. Accordingly, disclosed systems, apparatus, articles of manufacture, and methods improve the efficiency of using a computing device by preventing computational exception generation and reduce network bandwidth by avoiding error log traffic to/from the model training circuitry. Disclosed systems, apparatus, articles of manufacture, and methods are accordingly directed to one or more improvement(s) in the operation of a machine such as a computer or other electronic and/or mechanical device.

Example methods, apparatus, systems, and articles of manufacture to label data are disclosed herein. Further examples and combinations thereof include the following:

Example 1 includes an apparatus comprising interface circuitry, machine-readable instructions, and at least one processor circuit to be programmed by the machine-readable instructions to separate label data in a first data set from portions of an image, generate candidate labeled data based on associated ones of unlabeled portions of the image and optical character recognition (OCR) data, generate key performance indicator (KPI) metric values based on a comparison between the candidate labeled data and a second data set, and adjust weights of a model based on the KPI metric values.

Example 2 includes the apparatus as defined in example 1, wherein the machine-readable instructions are to cause one or more of the at least one processor circuit to generate the first data set and the second data set based on labeled image data associated with the image.

Example 3 includes the apparatus as defined in example 2, wherein the second data set retains the label data, the retained label data unmodified from an original format.

Example 4 includes the apparatus as defined in example 3, wherein the machine-readable instructions are to cause one or more of the at least one processor circuit to compare the candidate labeled data with the retained label data associated with the second data set.

Example 5 includes the apparatus as defined in example 1, wherein the machine-readable instructions are to cause one or more of the at least one processor circuit to generate first polygons corresponding to the unlabeled portions, and generate second polygons corresponding to the OCR data.

Example 6 includes the apparatus as defined in example 5, wherein the machine-readable instructions are to cause one or more of the at least one processor circuit to identify the associated ones of the unlabeled portions and the OCR data based on respective intersections of the first polygons and the second polygons.

Example 7 includes the apparatus as defined in example 1, wherein the machine-readable instructions are to cause one or more of the at least one processor circuit to unlink label data in the first data set, the second data set including originally labeled data associated with the crops of the image.

Example 8 includes the apparatus as defined in example 1, wherein the model is a machine-learning model, and wherein the machine-readable instructions are to cause one or more of the at least one processor circuit to adjust weights of the machine-learning model.

Example 9 includes the apparatus as defined in example 1, wherein the portions of the image represent separate product images within the image.

Example 10 includes At least one non-transitory machine-readable medium comprising machine-readable instructions to cause at least one processor circuit to at least unlink label data in a first data set from portions of an image, generate candidate labeled portion data based on associated ones of unlabeled portions of the image and optical character recognition (OCR) data, generate key performance indicator (KPI) metric values based on a comparison between the candidate labeled portion data and a second data set, and adjust weights of a model based on the KPI metric values.

Example 11 includes the at least one non-transitory machine-readable medium as defined in example 10, wherein the machine-readable instructions are to cause one or more of the at least one processor circuit to generate the first data set and the second data set based on labeled image data associated with the image.

Example 12 includes the at least one non-transitory machine-readable medium as defined in example 11, wherein the machine-readable instructions are to cause one or more of the at least one processor circuit to retain the label data in an unmodified format.

Example 13 includes the at least one non-transitory machine-readable medium as defined in example 12, wherein the machine-readable instructions are to cause one or more of the at least one processor circuit to compare the candidate labeled data with the retained label data associated with the second data set.

Example 14 includes the at least one non-transitory machine-readable medium as defined in example 10, wherein the machine-readable instructions are to cause one or more of the at least one processor circuit to generate first polygons corresponding to the unlabeled portions, and generate second polygons corresponding to the OCR data.

Example 15 includes the at least one non-transitory machine-readable medium as defined in example 14, wherein the machine-readable instructions are to cause one or more of the at least one processor circuit to identify the associated ones of the unlabeled portions and the OCR data based on respective intersections of the first polygons and the second polygons.

Example 16 includes the at least one non-transitory machine-readable medium as defined in example 10, wherein the machine-readable instructions are to cause one or more of the at least one processor circuit to separate label data in the first data set, the second data set including originally labeled data associated with the crops of the image.

Example 17 includes the at least one non-transitory machine-readable medium as defined in example 10, wherein the machine-readable instructions are to cause one or more of the at least one processor circuit to adjust weights of a machine-learning model.

The following claims are hereby incorporated into this Detailed Description by this reference. Although certain example systems, apparatus, articles of manufacture, and methods have been disclosed herein, the scope of coverage of this patent is not limited thereto. On the contrary, this patent covers all systems, apparatus, articles of manufacture, and methods fairly falling within the scope of the claims of this patent.

**Claims**

1. An apparatus comprising:

   interface circuitry;
   machine-readable instructions; and
   at least one processor circuit to be programmed by the machine-readable instructions to:

   separate label data in a first data set from portions of an image;
generate candidate labeled data based on associated ones of unlabeled portions of the image and optical character recognition (OCR) data;
generate key performance indicator (KPI) metric values based on a comparison between the candidate labeled data and a second data set; and
adjust weights of a model based on the KPI metric values.

2. The apparatus as defined in claim 1, wherein the machine-readable instructions are to cause one or more of the at least one processor circuit to generate the first data set and the second data set based on labeled image data associated with the image.

3. The apparatus as defined in claims 1 or 2, wherein the second data set retains the label data, the retained label data unmodified from an original format.

4. The apparatus as defined in claim 3, wherein the machine-readable instructions are to cause one or more of the at least one processor circuit to compare the candidate labeled data with the retained label data associated with the second data set.

5. The apparatus as defined in claims 1 or 2, wherein the machine-readable instructions are to cause one or more of the at least one processor circuit to:

generate first polygons corresponding to the unlabeled portions; and
generate second polygons corresponding to the OCR data.

6. The apparatus as defined in claim 5, wherein the machine-readable instructions are to cause one or more of the at least one processor circuit to identify the associated ones of the unlabeled portions and the OCR data based on respective intersections of the first polygons and the second polygons.

7. The apparatus as defined in claim 1, wherein the machine-readable instructions are to cause one or more of the at least one processor circuit to unlink label data in the first data set, the second data set including originally labeled data associated with the crops of the image.

8. The apparatus as defined in any of claims 1-7, wherein the model is a machine-learning model, and wherein the machine-readable instructions are to cause one or more of the at least one processor circuit to adjust weights of the machine-learning model.

9. The apparatus as defined in any of claims 1-8, wherein the portions of the image represent separate product images within the image.

10. At least machine-readable medium comprising machine-readable instructions to cause at least one processor circuit to at least:

unlink label data in a first data set from portions of an image;
generate candidate labeled portion data based on associated ones of unlabeled portions of the image and optical character recognition (OCR) data;
generate key performance indicator (KPI) metric values based on a comparison between the candidate labeled portion data and a second data set; and
adjust weights of a model based on the KPI metric values.

11. The at least one machine-readable medium as defined in claim 10, wherein the machine-readable instructions are to cause one or more of the at least one processor circuit to generate the first data set and the second data set based on labeled image data associated with the image.

12. The at least one machine-readable medium as defined in claims 10 or 11, wherein the machine-readable instructions are to cause one or more of the at least one processor circuit to retain the label data in an unmodified format.

13. The at least one machine-readable medium as defined in claim 12, wherein the machine-readable instructions are to cause one or more of the at least one processor circuit to compare the candidate labeled data with the retained label data associated with the second data set.

14. The at least one machine-readable medium as defined in claims 10 or 11, wherein the machine-readable instructions are to cause one or more of the at least one processor circuit to:

generate first polygons corresponding to the unlabeled portions; and
generate second polygons corresponding to the OCR data.

15. The at least one machine-readable medium as defined in claim 14, wherein the machine-readable instructions are to cause one or more of the at least one processor circuit to identify the associated ones of the unlabeled portions and the OCR data based on respective intersections of the first polygons and the second polygons.

100

102

DATA
SOURCES

104

DATA LABEL
CIRCUITRY

106

MODEL TRAINING
CIRCUITRY

## FIG. 1

DATA LABEL CIRCUITRY <u>104</u>

202

DISTANT SUPERVISION PIPELINE CIRCUITRY

204

ACTIVE LEARNING PIPELINE CIRCUITRY

206

MERGE PIPELINE CIRCUITRY

**FIG. 2**

**FIG. 3**

EP 4 738 281 A1

400

408

402
REGION SPECIFIC
IMAGES

406

ACTIVE LEARNING
CIRCUITRY

410

KPIs

404
CROPS MODEL
PARAMETERS

# FIG. 4

FIG. 5

104

DATA LABEL CIRCUITRY

DISTANT SUPERVISION PIPELINE CIRCUITRY - 202          318

| OCR CIRCUITRY 308 | UNLINK CIRCUITRY 314 | DISTANT SUPERVISION CIRCUITRY |
|---|---|---|

320

| DATA ACQUISITION CIRCUITRY 602 | COMBINATION CIRCUITRY 604 | EVALUATION CIRCUITRY 322 |
|---|---|---|

ACTIVE LEARNING PIPELINE CIRCUITRY - 204

| ACTIVE LEARNING CIRCUITRY 406 | 604 | CROPS MODEL PARAMETERS |
|---|---|---|

MERGE PIPELINE CIRCUITRY 206

# FIG. 6

FIG. 7

706

GENERATE COMBINED INPUT

802

PERFORM OCR ON TRAINING IMAGES

804

PERFORM COORDINATES UNIFICATION BASED ON TRAINING IMAGES
AND TRAINING LOGS

806

COMBINE OCR OUTPUT, CROPS, CHARACTERISTICS DATA, AND
AUXILIARY CHARACTERISTICS

RETURN

# FIG. 8

— 708

```
┌─────────────────────────────────────┐
│   GENERATE UNLINKED INPUT PATH       │
└─────────────────────────────────────┘
                  │
                  ▼                           — 902
┌─────────────────────────────────────────────────┐
│        DECONSTRUCT CROPS FROM LABELS             │
└─────────────────────────────────────────────────┘
                  │
                  ▼                           — 904
┌─────────────────────────────────────────────────┐
│ GENERATE SEPARATED INPUT STREAMS AND TRANSMIT TO │
│         DISTANT SUPERVISION CIRCUITRY            │
└─────────────────────────────────────────────────┘
                  │
                  ▼
            ┌──────────┐
            │  RETURN  │
            └──────────┘
```

## FIG. 9

710

START

ASSIGN SIMILARITY SCORES TO CHARACTERISTICS FROM OCR DATA AND AUXILIARY CHARACTERISTICS — 1002

CALCULATE COSINE SIMILARITY SCORE FOR PRODUCT DESCRIPTION DATA — 1004

FOR A GIVEN IMAGE, SELECT A CROP POLYGON — 1006

CROP POLYGON INTERSECT OCR POLYGON ( BOUNDING BOX)? — 1008 — NO

YES

ASSOCIATE CROP WITH OCR DATA AND ASSOCIATED AUXILIARY CHARACTERISTICS — 1010

YES — ADDITIONAL CROPS? — 1012

NO

LINK CROPS WITH LABELS IN SPECIFIED FORMAT — 1014

RETURN

**FIG. 10**

—1100

START

ACQUIRE REGION SPECIFIC IMAGES AND LOGS —1102

ACQUIRE AUXILIARY CHARACTERISTICS —1104

GENERATE CROPS BASED ON INPUT IMAGE

GENERATE COMBINED INPUT —706

GENERATE UNLINKED INPUT PATH —708

PERFORM DISTANT SUPERVISION ANALYSIS —710

TRANSMIT LABELED DATA TO MODEL TRAINING CIRCUITRY —1106

END

# FIG. 11

FIG. 12

1300

PROCESSOR CIRCUITRY

1302

CORE 1

1314

CONTROL UNIT CIRCUITRY

REGISTER 0
REGISTER 1
REGISTER 2

REGISTER N

BUS

1316    1322

AL CIRCUITRY

1320    LEVEL 1 (L1) CACHE    1318

1306

INTERFACE CIRCUITRY

1316

1302

BUS    CORE 2

1314    1322

CONTROL UNIT CIRCUITRY

REGISTER 0
REGISTER 1
REGISTER 2

REGISTER N

ARITHMETIC AND LOGIC (AL) CIRCUITRY

1320    L1 CACHE    1318

BUS
1304

1302

CORE 3

1314

CONTROL UNIT CIRCUITRY

REGISTER 0
REGISTER 1
REGISTER 2

REGISTER N

BUS

1316    1322

AL CIRCUITRY

1320    L1 CACHE    1318

1302

CORE 4

1314

CONTROL UNIT CIRCUITRY

REGISTER 0
REGISTER 1
REGISTER 2

REGISTER N

BUS

1316    1322

AL CIRCUITRY

1320    L1 CACHE    1318

1302

CORE N-1

1314

CONTROL UNIT CIRCUITRY

REGISTER 0
REGISTER 1
REGISTER 2

REGISTER N

BUS

1316    1322

AL CIRCUITRY

1320    L1 CACHE    1318

LEVEL 2 (L2) CACHE

1310

1302

CORE N

1314

CONTROL UNIT CIRCUITRY

REGISTER 0
REGISTER 1
REGISTER 2

REGISTER N

BUS

1316    1322

AL CIRCUITRY

1320    L1 CACHE    1318

**FIG. 13**

**FIG. 14**

SOFTWARE
DISTRIBUTION
PLATFORM — 1505

INSTR
1232

NETWORK — 1510

PROCESSOR
PLATFORM(S) — 1200

1232

# FIG. 15

Europäisches
Patentamt
European
Patent Office
Office européen
des brevets

# EUROPEAN SEARCH REPORT

**Application Number**

EP 25 21 1961

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2023/237824 A1 (KWOK KIT HOWARD [CN]) 27 July 2023 (2023-07-27) <br> * abstract * <br> * paragraphs: [0030], [0033]-[0036], [0042]-[0043], [0046], [0048], [0050], [0120]-[0121] * <br> * figure 10, * <br> ----- | 1-4,7-13 | INV. <br> G06V10/774 <br> G06V20/62 |
| X | PETTERSSON TOBIAS ET AL: "Multimodal fine-grained grocery product recognition using image and OCR text", MACHINE VISION AND APPLICATIONS, SPRINGER VERLAG, DE, vol. 35, no. 4, 7 June 2024 (2024-06-07), XP037956966, ISSN: 0932-8092, DOI: 10.1007/S00138-024-01549-9 [retrieved on 2024-06-07] <br> * abstract * <br> * page 6, section 3 * <br> * pages 7 to 8, sections 4.1 and 4.2 * <br> * page 11, section 5.1 * <br> * figures 8, 9 * <br> ----- | 1,5-8, 10,14,15 | |

**TECHNICAL FIELDS SEARCHED (IPC)**

G06V

The present search report has been drawn up for all claims

| Place of search | Date of completion of the search | Examiner |
|---|---|---|
| The Hague | 8 December 2025 | Sagrebin-Mitzel, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 21 1961

This annex lists the patent family members relating to the patent documents cited in the above-mentioned European search report.
The members are as contained in the European Patent Office EDP file on
The European Patent Office is in no way liable for these particulars which are merely given for the purpose of information.

08-12-2025

| Patent document cited in search report | Publication date | Patent family member(s) | Publication date |
|---|---|---|---|
| US 2023237824 A1 | 27-07-2023 | CN 112115950 A | 22-12-2020 |
| | | GB 2614169 A | 28-06-2023 |
| | | JP 7610716 B2 | 08-01-2025 |
| | | JP 2023543640 A | 17-10-2023 |
| | | US 2023237824 A1 | 27-07-2023 |
| | | WO 2022062028 A1 | 31-03-2022 |

EPO FORM P0459

For more details about this annex : see Official Journal of the European Patent Office, No. 12/82